# EUROPÄISCHE PATENTSCHRIFT

(11) **EP 3 679 767 B1**
(45) Veröffentlichungstag und Bekanntmachung des Hinweises auf die Patenterteilung: **07.05.2025**
(21) Anmeldenummer: 18766214.3
(22) Anmeldetag: 06.09.2018
(51) Int. Cl.: H05B 6/64, B29C 35/08, B29C 49/42, B29C 49/64, H05B 3/80, H05B 6/70

(54) **VORRICHTUNG ZUM ERWÄRMEN VON KUNSTSTOFFVORFORMLINGEN MIT STATIONÄREM APPLIKATOR**
DEVICE FOR HEATING PLASTIC PREFORMS, COMPRISING A STATIONARY APPLICATOR
DISPOSITIF DE CHAUFFAGE DE PRÉFORMES EN MATIÈRE PLASTIQUE AVEC UN APPLICATEUR STATIONNAIRE

(30) Priorität: 06.09.2017 DE 102017120551
(43) Veröffentlichungstag der Anmeldung: 15.07.2020
(60) Teilanmeldung: 25165941.3
(73) Patentinhaber: Krones AG, 93073 Neutraubling (DE)
(72) Erfinder: FEIGL, Alexander, 93073 Neutraubling (DE); BETZ, Christian, 93073 Neutraubling (DE); ZIMMERER, Johann, 93073 Neutraubling (DE); SENN, Konrad, 93073 Neutraubling (DE); COMPERA, Christian, 93073 Neutraubling (DE)
(74) Vertreter: Hannke Bittner & Partner mbB Regensburg
(86) Internationale Anmeldenummer: PCT/EP2018/073969
(87) Internationale Veröffentlichungsnummer: WO 2019/048528

(56) Entgegenhaltungen:
- EP-A1- 2 425 959
- EP-A1- 2 727 705
- EP-A2- 2 208 597
- EP-A2- 2 439 047
- DE-A1- 102008 024 108
- DE-A1- 102012 107 961
- GB-A- 1 380 447
- US-A1- 2014 167 301

## Beschreibung

Die vorliegende Erfindung bezieht sich auf eine Vorrichtung und ein Verfahren zum Erwärmen von Kunststoffvorformlingen. Aus dem Bereich der getränkeherstellenden Industrie ist es bekannt, dass Kunststoffvorformlinge erwärmt werden und in diesem erwärmten Zustand beispielsweise durch eine Blasformmaschine bzw. durch eine Streckblasmaschine expandiert werden. Zum Erwärmen dieser Kunststoffvorformlinge werden üblicherweise Infrarotöfen eingesetzt. Diese Infrarotöfen weisen Infrarotheizelemente auf, an denen die Kunststoffvorformlinge vorbeitransportiert werden.

In jüngerer Zeit ist es auch bekannt geworden, zum Erwärmen der Kunststoffvorformlinge Mikrowellenöfen einzusetzen. Bei diesen Mikrowellenöfen ist an einem Träger eine Vielzahl von Erwärmungseinrichtungen, beispielsweise Heizkavitäten, angeordnet. Die Kunststoffvorformlinge werden vereinzelt in diesen Heizkavitäten erwärmt. Diese Vorgehensweise hat sich zwar bewährt, ist jedoch in der Ausführung und Herstellung relativ aufwändig.

Beispielsweise ist aus der EP 2 727 705 A1 eine Vorrichtung zum Erwärmen von Kunststoffvorformlingen mit Sicherheitseinrichtung bekannt, die Vorformlinge mittels einer Erwärmungseinrichtung erwärmt werden, welche ein wenigstens zeitweise unterhalb dem Transportpfad angeordnetes bewegliches Wandungselement aufweist, wobei durch die Bewegung des Wandungselements der Vorformling insbesondere aus der Erwärmungseinrichtung ausgeschleust wird.

Aus der DE 10 2012 107 961 A1 ist eine Vorrichtung zum Erwärmen von Vorformlingen bekannt, welche Erwärmungselemente, wie beispielsweise Mikrowellen-Erwärmungselemente, aufweist.

Der vorliegenden Erfindung liegt daher die Aufgabe zugrunde, eine Mikrowellenerwärmungseinrichtung zu schaffen, welche in der Herstellung gegenüber Vorrichtungen aus dem Stand der Technik einfacher zu handhaben ist. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen gemäß Anspruch 1 weist eine Transporteinrichtung auf, welche die Kunststoffvorformlinge entlang eines vorgegebenen Transportpfads transportiert. Dabei weist die Transporteinrichtung Halteeinrichtungen zum Halten der Kunststoffvorformlinge auf und der Transportpfad weist wenigstens einen Erwärmungsabschnitt auf, innerhalb dessen die Kunststoffvorformlinge erwärmt werden. Weiterhin weist die Vorrichtung eine Erwärmungseinrichtung auf, welche insbesondere stationär wenigstens abschnittsweise entlang des Transportpfads angeordnet ist und welche die von der Transporteinrichtung transportierten Kunststoffvorformlinge während deren Transport durch den Erwärmungsabschnitt erwärmt. Dabei weist diese Erwärmungseinrichtung eine Applikatoreinrichtung und insbesondere eine stationäre Applikatoreinrichtung auf, welche dazu geeignet und bestimmt ist, die Kunststoffvorformlinge zu deren Erwärmung mit Mikrowellen zu beaufschlagen.

Erfindungsgemäß ist die Transporteinrichtung zumindest in dem Erwärmungsabschnitt derart gegenüber der Applikatoreinrichtung angeordnet, dass zumindest ein Abschnitt der Halteeinrichtungen außerhalb der Applikatoreinrichtung angeordnet ist.

Im Folgenden wird anstelle des Begriffes Applikatoreinrichtung auch vereinfachend der Begriff Applikator verwendet. Bevorzugt ist die Applikatoreinrichtung derart gestaltet, dass sie dazu geeignet und bestimmt ist, wenigstens zeitweise mehrere Kunststoffvorformlinge gleichzeitig aufzunehmen. Besonders befinden sich daher wenigstens zeitweise zwei oder mehrere Kunststoffvorformlinge gleichzeitig in der Applikatoreinrichtung und/oder werden durch diese hindurch transportiert.

Bei dieser erfindungsgemäßen Ausgestaltung wird vorgeschlagen, die Transporteinrichtung zumindest teilweise außerhalb der Applikatoreinrichtung zu platzieren. Auf diese Weise kann erreicht werden, dass im Wesentlichen nur die Kunststoffvorformlinge erwärmt werden, nicht jedoch Bestandteile der Transporteinrichtung, wie insbesondere aber nicht ausschließlich die Halteeinrichtungen.

Auf diese Weise kann eine effiziente Erwärmung der Kunststoffvorformlinge erreicht werden, ohne dabei eine Beschädigung von weiteren Elementen der Vorrichtung und insbesondere der Transporteinrichtung zu riskieren.

Bei einer weiteren bevorzugten Ausführungsform werden die Kunststoffvorformlinge während ihrer Erwärmung im Erwärmungsabschnitt in einer Richtung senkrecht zu ihrer Längsachse transportiert werden. Bevorzugt ist daher die Transporteinrichtung dazu geeignet und bestimmt, die Kunststoffvorformlinge senkrecht zu ihrer Längsrichtung zu transportieren.

Ebenfalls ist es so einfacher ein Austreten von Mikrowellenstrahlung aus der Applikatoreinrichtung zu verhindern, vor allem metallisch leitende Gegenstände die von außen in den Applikator reichen, erschweren eine effektive Schirmung des Applikators.

Die vorliegende Erfindung ist weiterhin auf eine Vorrichtung zum Erwärmen von Kunststoffvorformlingen gerichtet, welche eine Transporteinrichtung aufweist, welche die Kunststoffvorformlinge entlang eines vorgegebenen Transportpfads transportiert, wobei die Transporteinrichtung Halteeinrichtungen zum Halten der Kunststoffvorformlinge aufweist und wobei dieser Transportpfad wenigstens einen Erwärmungsabschnitt aufweist, innerhalb dessen die Kunststoffvorformlinge erwärmt werden. Weiterhin weist die Vorrichtung eine Erwärmungseinrichtung auf, welche insbesondere stationär und insbesondere wenigstens abschnittsweise entlang des Transportpfads angeordnet ist und welche die von der Transporteinrichtung transportierten Kunststoffvorformlinge während deren Transport durch den Erwärmungsabschnitt erwärmt. Dabei weist die Erwärmungseinrichtung eine insbesondere stationär angeordnete Applikatoreinrichtung auf, welche dazu geeignet und bestimmt ist, die Kunststoffvorformlinge mit Mikrowellen zu deren Erwärmung zu beaufschlagen.

Erfindungsgemäß weist bei dieser Ausgestaltung die Vorrichtung eine Dreheinrichtung auf, welche die Kunststoffvorformlinge wenigstens teilweise während deren Erwärmung um deren Längsachse dreht.

Diese Dreheinrichtung kann dabei derart ausgebildet sein, dass sie die Halteeinrichtungen mit den daran angeordneten Kunststoffvorformlingen individuell dreht. So könnte die Dreheinrichtung etwa jeweils Elektromotoren aufweisen, welche den einzelnen Halteeinrichtungen der Kunststoffvorformlinge zugeordnet ist.

Bevorzugt ist jedoch eine Dreheinrichtung vorgesehen, welche die Kunststoffvorformlinge einheitlich dreht. So könnte die Dreheinrichtung etwa einen Zahnriemen aufweisen, in den entsprechende Zahnräder, die an den einzelnen Halteeinrichtungen angeordnet sind eingreifen so dass durch die Transportbewegung der Halteeinrichtungen auch gleichzeitig die Drehung der Halteeinrichtungen ausgelöst wird. Dieser Zahnriemen könnte dabei angetrieben sein, um eine Rotationsgeschwindigkeit der Halteeinrichtungen und insbesondere der daran angeordneten Kunststoffvorformlinge verändern zu können.

Bevorzugt bestehen wenigstens Abschnitte der Halteeinrichtungen aus dielektrischem Material.

Wie erwähnt, ist die Applikatoreinrichtung (bei beiden der oben genannten erfindungsgemäßen Ausführungen) insbesondere stationär angeordnet. Es wäre jedoch auch denkbar, dass umgekehrt die Kunststoffvorformlinge stationär angeordnet sind und sich die Applikatoreinrichtung diesen gegenüber bewegt. Bevorzugt ist jedoch die Vorrichtung im Gegensatz zu den oben beschriebenen Vorrichtungen aus dem Stand der Technik derart aufgebaut, dass die Kunststoffvorformlinge jeweils durch die gleiche Applikatoreinrichtung erwärmt werden. Bevorzugt führt die Transporteinrichtung eine Relativbewegung zwischen den Kunststoffvorformlingen und der Applikatoreinrichtung aus, bevorzugt eine Bewegung, welche senkrecht zu einer Längsrichtung der Kunststoffvorformlinge steht.

Bei einer bevorzugten Ausführungsform ist die Transporteinrichtung dazu geeignet und bestimmt, die Kunststoffvorformlinge vereinzelt zu transportieren. So kann beispielsweise die Transporteinrichtung eine umlaufende Transportkette aufweisen, an der die einzelnen Halteeinrichtungen angeordnet sind. Daneben wäre es jedoch auch möglich, dass die Transporteinrichtung einen Träger aufweist, der insbesondere als Linearmotor ausgebildet ist und die einzelnen Halteeinrichtungen an gegenüber diesem Träger als bewegbare Shuttles angeordnet sind. Es ist denkbar dass dieser Linearmotor zumindest teilweise mit einer Einzelspulenansteuerung versehen ist, so dass sich die Träger unabhängig voneinander bewegen lassen. Bevorzugt ist ein Linearmotor mit Langstatorausführung vorgesehen. Besonders bevorzugt ist wenigstens ein Linearmotor mit Langstatorausführung und einer Einzelspulenansteuerung vorgesehen.

Bei einer weiteren vorteilhaften Ausführungsform weist die Vorrichtung eine Mikrowellenerzeugungseinrichtung auf, welche insbesondere außerhalb der Applikatoreinrichtung angeordnet ist. Weiterhin weist die Vorrichtung eine Einkoppeleinrichtung auf, welche die außerhalb der Applikatoreinrichtung erzeugten Mikrowellen in die Applikatoreinrichtung einkoppelt.

Erfindungsgemäß ist der Applikator als Element bzw. Einheit aufgebaut ist, welche einen Schlitz aufweist, durch welche hindurch die Kunststoffvorformlinge transportiert werden. Dabei kann die Applikatoreinrichtung wie unten genauer erläutert derart gestaltet sein, dass aus diesem Spalt keine oder nur in geringfügigem Maße Mikrowellen austreten. Besonders bevorzugt ist die Transporteinrichtung dazu geeignet und bestimmt, die Kunststoffvorformlinge mit Geschwindigkeiten zu transportieren, welche zwischen 0,01 m/s und 5 m/s, bevorzugt zwischen 0,1 m/s und 1 m/s liegt.

Die Vorrichtung weist eine Rotationseinrichtung auf, welche dazu geeignet und bestimmt ist, die Kunststoffvorformlinge insbesondere während deren Erwärmung um deren Längsachse zu drehen. Besonders bevorzugt ist dabei diese Rotationseinrichtung dazu geeignet und bestimmt, Drehgeschwindigkeiten zu realisieren, welche zwischen 1 und 2000 Umdrehungen pro Minute liegen, bevorzugt zwischen 50 und 1000 Umdrehungen pro Minute und besonders bevorzugt zwischen 300 und 900 Umdrehungen pro Minute.

Besonders bevorzugt ist eine Rotationsgeschwindigkeit der Kunststoffvorformlinge während deren Transport einstellbar. Bei einer weiteren bevorzugten Ausführungsform kann eine Steuerungsvorrichtung vorgesehen sein, welche eine Rotationsgeschwindigkeit der Kunststoffvorformlinge in Abhängigkeit von deren Transportgeschwindigkeit, mit der sie durch die Transporteinrichtung transportiert werden, festlegt.

Bei einer weiteren vorteilhaften Ausführungsform ist die Transporteinrichtung dazu geeignet und bestimmt, die Kunststoffvorformlinge mit einem vorgegebenen Abstand zueinander zu transportieren. Besonders bevorzugt ist dieser Abstand (bezogen auf ein Zentrum eines Kunststoffvorformlings zu dem benachbarten Kunststoffvorformling) größer als 10 mm, bevorzugt größer als 15 mm, bevorzugt größer als 20 mm und besonders bevorzugt größer als 30 mm. Bei einer weiteren bevorzugten Ausführungsform ist dieser Abstand kleiner als 300 mm, bevorzugt kleiner als 200 mm, bevorzugt kleiner als 100 mm und besonders bevorzugt kleiner als 50 mm.

Durch die erfindungsgemäße Vorrichtung können die Kunststoffvorformlinge mit einem vorgegebenen Temperaturprofil beaufschlagt bzw. erwärmt werden. Dieses Temperaturprofil hängt dabei insbesondere von den physikalischen Parametern der verwendeten Kunststoffvorformlinge ab, also beispielsweise der Länge, deren Gewicht, deren Querschnitt und dergleichen.

Dabei ist es grundsätzlich möglich, dass der Applikator als Travelling Wave Guide oder als Resonator ausgebildet ist. Vorteilhaft ist der Applikator derart konzipiert bzw. ausgelegt, dass er eine dem zu erreichenden Temperaturprofil angepasste E-Feld-Verteilung ermöglicht. Dabei ist es möglich, dass der Schlitz bzw. der Spalt, durch den die Kunststoffvorformlinge während ihrer Erwärmung geführt werden, symmetrisch oder im Wesentlichen symmetrisch (d.h. Abweichungen bis zu einigen wenigen Millimetern) in der Mitte des Applikators liegt. Weiterhin ist es wie unten genauer erläutert möglich, dass der Applikator an wenigstens einer Seite offen ist, bevorzugt an wenigstens zwei Seiten und besonders bevorzugt an wenigstens drei Seiten. Auf diese Weise können die Kunststoffvorformlinge durch den Applikator geführt werden.

Besonders bevorzugt weist die Vorrichtung Kopplungs- und/oder Tuningbereiche auf, die besonders bevorzugt am Boden des Applikators und/oder an den Seiten des Applikators angeordnet sind. Diese Einrichtungen, wie beispielsweise Tuningelemente, sind geeignet und bestimmt, die Resonanzfrequenz des mit Kunststoffvorformlingen teilweise gefüllten bzw. vollständig gefüllten Applikators an die Emissionsfrequenz der Mikrowellenerzeugungseinrichtung anzupassen.

Bei einer weiteren vorteilhaften Ausführungsform weist der Applikator einen Zuführbereich auf, für welchen dem Applikator Mikrowellen zugeführt werden können. Als Zuführelement kann dabei beispielsweise ein Hohlleiter dienen. Erfindungsgemäß weist die Vorrichtung eine Mikrowellenerzeugungseinrichtung wie etwa ein Magnetron auf, welches außerhalb der Applikatoreinrichtung angeordnet ist.

Bei einer weiteren vorteilhaften Ausführungsform weist der Applikator auch wenigstens ein Umlenkelement auf, welches die Ausbreitungsrichtung der Mikrowellen umlenkt, bevorzugt um einen Winkel umlenkt, der größer ist als 30°, bevorzugt größer als 70°. Besonders bevorzugt ist die Umlenkeinrichtung dazu geeignet und bestimmt, die Mikrowellen bzw. deren Ausbreitung um einen Winkel zu ändern, der kleiner ist als 180°, bevorzugt kleiner 150°, bevorzugt kleiner als 120° und besonders bevorzugt kleiner als 100°. Besonders bevorzugt bewirkt die Umlenkeinrichtung eine Umlenkung der Ausbreitungsrichtung der Mikrowellen um 90°. Bevorzugt ist die Applikatoreinrichtung als Resonatoreinrichtung ausgeführt.

Dabei wäre es möglich, dass diese Umlenkeinrichtung gerundete Oberflächen aufweist, es wäre jedoch auch möglich, dass die Umlenkeinrichtung eine Vielzahl von schräg jedoch gerade verlaufenden Sektionen aufweist.

Besonders bevorzugt weist wie oben erwähnt die Applikatoreinrichtung einen Tuning- bzw. Abstimmbereich auf sowie einen Zuführbereich. Besonders bevorzugt ist derjenige Bereich des Applikators, durch den die Kunststoffvorformlinge transportiert werden, zwischen dem Zuführbereich und dem Abstimmbereich angeordnet.

Besonders bevorzugt ist ein Design des Applikators bzw. auch des Zuführ- und Abstimmbereichs so ausgebildet, dass das Risiko von Plasmabögen minimiert wird. Dies kann u.a. erreicht werden, indem scharfe Ecken oder Kanten vermieden werden.

Bei einer besonders bevorzugten Ausführungsform weist der Zuführbereich ein Zuführfenster auf, welches aus dielektrischem Material besteht oder ein solches aufweist. Dieses Fenster kann an dem Eingangsbereich des Applikators vorgesehen sein, insbesondere um einen Mikrowellengenerator zu schützen. Besonders bevorzugt ist dieses Fenster derart ausgelegt, dass es eine minimale Interferenz mit dem Feld innerhalb des Applikators ausbildet.

Ein Ziel ist es, die MW-Quelle gegen Gase, Partikel etc. aus dem Bereich des Applikators zu schützen. I.d.R. werden zu diesem Zweck Quarzplatten an einer geeigneten Stelle des zuführenden Hohlleiters platziert. Geeignet sind insbesondere dielektrische Materialien mit sehr geringen dielektrischen Verlusten, wie z.B. Al2O3, Quarz, Teflon.

Wie unten genauer erläutert weist die Vorrichtung weiterhin Chokes, also Dämpfungseinrichtungen bzw. Abschirmeinrichtungen auf, um den Austritt von Mikrowellen aus dem Applikator möglichst weitgehend zu verhindern. Insbesondere soll dabei ein Austreten von Mikrowellen aus dem Schlitz, durch den die Kunststoffvorformlinge geführt werden, so weit wie möglich verhindert werden.

Bei einer weiteren vorteilhaften Ausführungsform weist die Mikrowellenanordnung wenigstens eine Stromquelle bzw. eine Leistungsversorgung auf. Weiterhin weist die Vorrichtung wenigstens einen Leistungskopf auf. Dieser Leistungskopf (Power-Head) weist dabei bevorzugt Einheiten auf, wie ein Magnetron, einen Launcher und/oder ein Festkörperelement, einen Anschluss für einen Hohlleiter, ein Gehäuse, Elektronik und eine Wasserversorgung. Daneben kann auch ein Isolator vorgesehen sein. Daneben können auch Sensoreinrichtungen vorgesehen sein, wie etwa Sensoreinrichtungen zum Erfassen von Plasma, Temperatursensoren, sowie Sensoren zum Erfassen einer vor- und/oder rücklaufenden (Mikrowellen-)Leistung. Daneben kann auch ein Durchflussmesser für durchfließendes Kühlwasser vorhanden sein.

Bei einer weiteren vorteilhaften Ausführungsform weist die Mikrowellenerzeugungseinrichtung ein Magnetron und/oder einen sogenannten Launcher auf (d.h. eine Anordnung, um die MW-Strahlung der Antenne des Magnetrons verlustarm in einen Hohlleiter und/oder einen Koaxialleiter einzukoppeln).
. Daneben können die Mikrowellen auch durch eine Festkörperquelle (Solid State) erzeugt werden. Weiterhin weist die Vorrichtung bevorzugt einen Isolator auf, wobei besonders bevorzugt ein Zirkulator und/oder eine Wasserlast vorgesehen sein kann.

Vorteile einer Festkörperquelle bestehen insbesondere darin, dass eine Frequenzanpassung an die Eigenfrequenz des Resonanzsystems erfolgen kann. Dadurch kann auf eine zusätzliche Anpassung der Frequenz im Resonanzsystem (Tuning) verzichtet werden. Auch kann eine Frequenzanpassung sehr schnell erfolgen.

Bei einer weiteren vorteilhaften Ausführungsform ist die Mikrowellenerzeugungseinrichtung dazu ausgelegt, Mikrowellen in einem Frequenzbereich zwischen 850 MHz und 980 MHz auszugeben, bevorzugt zwischen 900 MHz und 930 MHz.

Bei einer weiteren vorteilhaften Ausführungsform liegt ein Leistungsbereich des Mikrowellengenerators zwischen 0,1 kW und 1000 kW, bevorzugt zwischen 1 kW und 300 kW und besonders bevorzugt zwischen 5 kW und 100 kW.

Dabei wäre es möglich, eine oder auch mehrere Mikrowellenquellen vorzusehen. Besonders bevorzugt liegt die Anzahl der Mikrowellenquellen zwischen 1 und 100, bevorzugt zwischen 1 und 10.

Die gesamte Vorrichtung kann bevorzugt wenigstens einen derartigen Applikator aufweisen, es wäre jedoch auch denkbar, dass die Vorrichtung mehr als einen Applikator aufweist, beispielsweise zwischen 1 und 20 Applikator und bevorzugt zwischen 2 und 6 Applikatoren. Diese Applikatoren können seriell angeordnet sein, werden also hier nacheinander durchlaufen.

Bei einer besonders bevorzugten Ausführungsform sind die einzelnen Applikatoren jeweils bestimmten Mikrowellenquellen zugeordnet. So ist es möglich, dass eine Mikrowellenquelle einem Applikator zugeordnet ist. Es wäre jedoch auch möglich, dass einer Mikrowellenquelle mehrere Applikatoren zugeordnet sind und dabei beispielsweise ein Leistungsverteiler (Powersplitter) vorgesehen sein kann. Dabei ist es wiederum möglich, dass die benötigte Mikrowellenleistung von einem Magnetron oder einem Leistungsverteilsystem stammt, welches auf Leistungsverteilern basiert. In der Auslegung der Vorrichtung bestehen mehrere Möglichkeiten. So kann ausgehend von einer Stromquelle eine Vielzahl von Generatoren vorgesehen sein, denen jeweils Mikrowellenquellen zugeordnet sind.

Diesen Mikrowellenquellen kann wiederum jeweils ein Isolator zugeordnet sein und ausgehend von dem Isolator kann die Verteilung der Leistung insbesondere über einen Leistungsverteiler auf einen, zwei oder mehrere Applikatoren durchgeführt werden. Daneben wäre es auch möglich, dass eine Energieversorgung vorgesehen ist, an die sich ein Spannungsgenerator (oder allgemein eine Leistungsquelle) anschließt. Ausgehend von dem Spannungsgenerator (d.h. der Leistungsquelle) wird die Leistung auf eine Vielzahl von Mikrowellenquellen verteilt.

Jeder dieser Mikrowellenquellen ist bevorzugt ein Zirkulator und eine Wasserlast zugeordnet sowie auch ein Applikator. Auch sind Kombinationen aus diesen Vorgehensweisen denkbar. Mit anderen Worten sind unterschiedliche Varianten zu der Energieaufteilung auf eine Vielzahl von Applikatoren denkbar.

Auch wäre es möglich, Leistungssplitter seriell zu schalten. So könnten die Mikrowellen ausgehend von einer Mikrowellenquelle über einen Leistungsverteiler auf zwei oder mehrere Zweige aufgeteilt werden und ausgehen von diesen Zweigen über weitere Leistungsverteiler auf wiederum mehrere Applikatoren. Auch wäre es möglich, dass von einem Hauptstrang der Leistungsverteilung jeweils über einen Leistungsverteiler einzelne Applikatoren abgezweigt werden.

Bei einer weiteren vorteilhaften Ausführungsform ist der Applikator vom Typ TE10n. Bei diesem Design tritt eine Mode senkrecht zur Transportrichtung und senkrecht zur Längsachse der Kunststoffvorformlinge auf. Parallel zur Längsachse des Kunststoffvorformlings treten bevorzugt keine Moden auf. Bevorzugt verlaufen n Moden parallel zur Transportrichtung der Kunststoffvorformlinge. Besonders bevorzugt ist der Applikator geradlinig ausgebildet, das heißt die Kunststoffvorformlinge werden innerhalb des Applikators geradlinig transportiert. Es wäre jedoch denkbar, dass der Applikator gekrümmt ausgebildet ist.

Auch wäre es möglich, dass der Applikator geradlinig und gekrümmt verlaufende Abschnitte aufweist. Falls der Applikator gekrümmt ausgebildet ist, ist bevorzugt ein Krümmungswinkel vorgesehen, der zwischen 1 ° und 200 ° und besonders bevorzugt zwischen 90 ° und 180 ° liegt.

Der Applikator weist wie oben erwähnt einen Schlitz auf, durch den hindurch die Kunststoffvorformlinge geführt werden. Dabei ist die Transporteinrichtung bevorzugt derart ausgeführt, dass eine Mündung der Kunststoffvorformlinge nicht durch den Applikator bzw. Resonator geführt wird. Auf diese Weise wird ein übermäßiges Erwärmen gerade der Mündung der Kunststoffvorformlinge verhindert. Besonders bevorzugt werden die Kunststoffvorformlinge innerhalb des Applikators quer zu ihrer Längsrichtung transportiert.

Der Applikator ist bevorzugt derart gestaltet, dass in ihm eine vorgegebene Anzahl an Maxima des elektrischen Feldes ausgebildet wird, vorzugsweise eine Anzahl zwischen 1 und 40 Maxima und bevorzugt zwischen 3 und 14 Maxima und bevorzugt zwischen 3 und 8 Maxima.

Besonders bevorzugt kann der Resonator einen verengten Schlitzbereich aufweisen, durch den der Kunststoffvorformling geführt wird. Genauer gesagt kann sich dieser Schlitzbereich an den Resonator anschließen. In der Längsrichtung des Kunststoffvorformlings nach unten bzw. in Richtung einer Bodenkuppe des Kunststoffvorformlings kann sich der Innenraum des Applikators erweitern. Auf diese Weise wird eine effiziente Dämpfung von Mikrowellen erreicht.

Bei einer bevorzugten Ausführungsform weist die Vorrichtung eine Einkoppeleinrichtung auf, welche die Mikrowellen in den Applikator einkoppelt. Diese Einkoppeleinrichtung kann besonders bevorzugt eine Öffnung und bevorzugt eine irisartige Öffnung aufweisen. Diese Öffnung definiert den Eingang, das heißt den Kopplungseingang, des Applikators. Eine Blende besteht i.d.R. aus einem dünnen Blech, mit einer Öffnung, die kleiner ist als der Querschnitt des zuführenden Hohlleiters und des Querschnitt des Applikators (bevorzugt direkt hinter der Blende).

Bei einer bevorzugten Ausführungsform ist es möglich, dass diese Öffnung einstellbar ist. So ist es möglich, dass eine Größe dieser Öffnung veränderbar ist, es wäre jedoch auch möglich, dass eine Blende, welche diese Öffnung trägt, verschiebbar ist, insbesondere im Einkoppelbereich verschiebbar ist. Besonders bevorzugt ist eine Blende mit dieser Öffnung entlang einer geraden Richtung verschiebbar. Daneben ist es auch möglich, dass die effektive Weite (der Koppelfaktor) dieser Iris bzw. der Öffnung dadurch angepasst wird, indem zusätzliche Elemente in den Zuführbereich eingebracht werden, wie beispielsweise eine metallische Struktur oder eine dielektrische Struktur. Durch das Zusammenspiel der Blende und der zusätzlichen Elemente wird die effektive Weite (der Koppelfaktor) im Idealfall stets so angepasst das bei gleichzeitigem Tuning der Frequenz ein Minimum der Leistung vom Applikator bzw. Resonator reflektiert wird.

Weiterhin ist es möglich, dass der Zuführbereich unterschiedlich relativ zu dem Applikator positioniert werden kann. Auf diese Weise kann eine Einkopplung der Mikrowellen vom Boden her oder auch von der Seite her realisiert werden. Eine Einkopplung vom Boden des Applikators her führt zu einer geringeren Leckage von Mikrowellen, aber die Einkopplung von der Seite her ist auch möglich. Bevorzugt erfolgt eine Einkopplung der Mikrowellen vom Boden des Applikators her. Dabei ist besonders bevorzugt der Materialkanal an der Oberseite des Applikators angeordnet. Besonders bevorzugt werden die Kunststoffvorformlinge durch einen an der oberen Oberfläche des Applikators angeordneten Schlitz transportiert.

Besonders bevorzugt werden die Kunststoffvorformlinge mit ihrer Mündung nach oben durch den Applikator transportiert. Wie erwähnt können die Strahlen auch wahlweise von der Seite her, das heißt der rechten oder linken Seite bezüglich des Transportpfads des Applikators eingekoppelt werden. Daneben wäre auch ein koaxialer Input ausgehend von der Mikrowellenquelle möglich, d.h. in der Längsrichtung des Applikators. Bevorzugt ist in diesem Fall die Kopplung nicht durch eine Iris definiert, sondern durch den Übergang von einer Koaxialleitung in den Wellenhohlleiter. Besonders bevorzugt kann in diesem Fall der Applikator einen Koaxialleitereingang aufweist.

Die Transporteinrichtung ist zumindest in dem Erwärmungsbereich derart ausgebildet bzw. angeordnet, dass wenigstens Abschnitte der Kunststoffvorformlinge außerhalb der Applikatoreinrichtung und/oder außerhalb des Bereichs, in dem die Mikrowellen befindlich sind, transportiert werden. Bei einer weiteren bevorzugten Ausführungsform sind die Haltelemente wenigstens abschnittsweise oberhalb der Applikatoreinrichtung angeordnet.

Auf diese Weise wird erreicht, dass die Halteeinrichtungen selbst nicht oder nur geringfügig von den Mikrowellen beeinflusst bzw. erwärmt werden.

Bei einer weiteren vorteilhaften Ausführungsform sind die Halteeinrichtungen als Innengreifereinrichtungen ausgestaltet, die wenigstens abschnittsweise in die Mündungen der Kunststoffvorformlinge eingreifen, um diese zu halten. Es könnten jedoch auch Außengreifer eingesetzt werden, welche insbesondere die Kunststoffvorformlinge an deren Sicherungsring und/oder deren Tragring und/oder den Bereichen zwischen dem Sicherungsring und dem Tragring halten
Im Folgenden werden die Halteeinrichtungen, die bevorzugt für die erfindungsgemäße Vorrichtung verwendet werden, im Detail beschrieben. Es wird jedoch darauf hingewiesen, dass diese Halteeinrichtungen auch für andere Zwecke verwendet werden können. Die Anmelderin behält sich daher vor, die hier beschriebene Ausgestaltung der Halteeinrichtungen auch separat zu beanspruchen.

Erfindungsgemäße Halteeinrichtungen zum Halten von Stückgütern, insbesondere von Behältnissen und insbesondere von Kunststoffvorformlingen weisen einen ersten Befestigungsabschnitt auf, mit welchem sie an einer Transporteinrichtung, wie etwa einer Transportkette befestigbar sind. Weiterhin weisen die Halteeinrichtungen ein Eingriffs- bzw. Haltemittel auf, welches zum Halten von Kunststoffvorformlingen geeignet und bestimmt ist. Insbesondere handelt es sich dabei um ein Innengreifelement, welches in die Mündungen der Kunststoffvorformlinge eingreifen kann. Besonders bevorzugt weisen die Halteeinrichtungen in einem Bereich, der zwischen dem Befestigungsabschnitt und dem Halteabschnitt liegt, Führungseinrichtungen auf, die insbesondere zur seitlichen Führung und zur Führung in Transportrichtung der Haltelemente dienen.

Diese Ausgestaltung ist insbesondere dann relevant, wenn die Halteeinrichtungen selbst eine große Länge, das heißt eine große Länge in der Längsrichtung der Kunststoffvorformlinge aufweisen. Im Stand der Technik werden üblicherweise Kunststoffvorformlinge mit vergleichsweise kurzen Halteeinrichtungen insbesondere an einer Kette durch eine Heizeinrichtung transportiert. Die Länge der Kunststoffvorformlingsgreifer ist so gewählt, dass sie bei einer normalen mechanischen Aufhängung auch bei einer Drehung der Kunststoffvorformlingsgreifer mit aufgesteckten Kunststoffvorformlingen einen guten Rundlauf gewährleisten können. Dies bedeutet, dass der Kunststoffvorformling auch bei hohen Umdrehungszahlen rundläuft.

Bei zu langen Halteeinrichtung, welche insbesondere für die hier vorliegende Anwendung eines Mikrowellenapplikators vorteilhaft sind (da dann die eigentliche Transporteinrichtung sehr weit von der Applikatoreinrichtung beabstandet werden kann) kann ein guter Rundlauf des Behältnisses nicht mehr gewährleistet werden. Dies kann zur Folge haben, dass zum einen ein nachfolgender Prozess nicht funktioniert, zum anderen kann schlimmstenfalls das zu transportierende Verhältnis verloren gehen.

Die Erfindung schlägt daher vor, in einem Bereich die Haltelemente zu führen und insbesondere zentriert zu führen. Dabei kann eine Führungseinrichtung vorgesehen sein, welche eine Führung in mehrere Richtungen, bevorzugt in wenigstens zwei gegenüberliegende Richtungen und/oder in zwei zueinander senkrechten Richtungen besonders bevorzugt in allen Richtungen erreicht. Bevorzugt sind diese Richtungen jedoch senkrecht zu einer Längsrichtung der Kunststoffvorformlinge.

Bevorzugt kann hier eine Führung sowohl in der Transportrichtung, als auch in einer senkrecht zur Transportrichtung stehenden Richtung erreicht werden. Bei einer besonders bevorzugten Ausführungsform weist diese Führungseinrichtung wenigstens eine Lagerungseinrichtung auf, das heißt insbesondere einen Innenring, an dem drehbar ein Außenring gelagert ist. Dieser Außenring kann beispielsweise in Kontakt mit einem entsprechenden Außenring einer benachbarten Halteeinrichtung (d.h. in oder entgegen der Laufrichtung benachbart) in Kontakt stehen. Auch kann dieser Außenring mit einer seitlichen Führung in Kontakt stehen, um so die Kunststoffvorformlinge in jeder Richtung seitlich zu führen. Auf diese Weise kann auch bei einer Verlängerung der Halteeinrichtungen der Rundlauf der Halteeinrichtung und des zu transportierenden Behältnisses verbessert werden. Durch die drehbare Lagerung der Halteeinrichtung kann insbesondere auch eine Drehung der Kunststoffvorformlinge um deren Längsrichtung erreicht werden.

Bevorzugt weist daher die Halteeinrichtung wenigstens ein Element zum Abrollen gegenüber einem weiteren Element wie etwa einer Führungskurve auf. Dieses Element ist dabei insbesondere bezüglich einer Längsrichtung der Halteeinrichtung und/oder des Kunststoffvorformlings drehbar gelagert.

Bei einer bevorzugten Ausführungsform weist die Führungseinrichtung wenigstens zwei derartige Drehlager auf, besonders bevorzugt wenigstens drei derartige Drehlager. Diese beiden Drehlager sind bevorzugt in einer Längsrichtung der Halteeinrichtung und/oder der Längsrichtung der Kunststoffvorformlinge übereinander angeordnet. Dabei wäre es möglich und bevorzugt dass diese beiden Drehlager koaxial bezüglich der Längsrichtung der Kunststoffvorformlinge drehbar gelagert sind, es wäre jedoch auch denkbar, dass die Drehlager bezüglich Achsen drehbar gelagert sind die bezüglich einander in einer zu der Längsrichtung der Kunststoffvorformlingen stehenden Richtung seitlich versetzt sind.

Dabei kann eines dieser Lager dazu geeignet sein, um an einem bezüglich der Transportrichtung linksseitigem Führungselement abzurollen, eine zweite Lagerungseinrichtung kann dazu geeignet und bestimmt sein, an einem rechtsseitigem Führungselement abzurollen und die dritte Lagerungseinrichtung kann dazu geeignet und bestimmt sein, an einer entsprechenden Führungseinrichtung des benachbarten Halteelements abzurollen. Bevorzugt sind diese Drehlager unabhängig voneinander drehbar und insbesondere nicht miteinander gekoppelt. Bevorzugt handelt es sich bei den Drehlagern um Wälzlager und insbesondere um Kugellager.

Diese Ausgestaltung wird genauer unter Bezugnahme auf die Figuren erläutert. Besonders bevorzugt sind die Führungseinrichtungen in der Längsrichtung der Kunststoffvorformlinge bzw. in der Längsrichtung der Halteeinrichtung unmittelbar übereinander angeordnet. Besonders bevorzugt ist die Führungseinrichtung in der Längsrichtung der Halteeinrichtung näher an dem Eingriffselement angeordnet, welches in die Mündungen der Kunststoffvorformlinge eingreift. Bei einer weiteren vorteilhaften Ausführungsform weist eine der Führungseinrichtungen einen größeren Querschnitt auf, als wenigstens eine weitere der Führungseinrichtungen und besonders bevorzugt als die beiden anderen Führungseinrichtungen. Bei dieser Führungseinrichtung handelt es sich insbesondere um diejenige Führungseinrichtung, die in Kontakt steht mit der Führungseinrichtung eines benachbarten Halteelements.

Besonders bevorzugt weist daher die Halteeinrichtung wenigstens ein Element zum Abrollen in Umfangsrichtung auf. Bei einer besonders bevorzugten Ausführungsform weisen die Halteeinrichtungen wenigstens ein Trennelement auf, um die Halteeinrichtung in Längsrichtung zu verlängern. Dabei wäre es denkbar, dass die Halteeinrichtung ein teleskopartiges Element aufweist, welches eine Verlängerung oder Verkürzung der Halteeinrichtung ermöglicht.

Bei einer weiteren vorteilhaften Ausführungsform ist die Halteeinrichtung wenigstens teilweise aus einem Material hergestellt, welches aus einem Dielektrikum und/oder einem Nichtdielektrikum oder dergleichen gewählt ist. Besonders bevorzugt ist die Halteeinrichtung derart gestaltet, dass die, wie oben erwähnt, seitlich und/oder in Laufrichtung und/oder gegen die Laufrichtung in Bezug auf ein nachfolgendes bzw. benachbarte Halteeinrichtung bzw. Halteelement geführt wird.

Bei einer weiteren vorteilhaften Ausführungsform sind die zueinander benachbarten Halteeinrichtungen unabhängig voneinander drehbar. Besonders bevorzugt sind die Halteeinrichtungen auch unabhängig voneinander in einer Längsrichtung der Kunststoffvorformlinge verfahrbar. Auf diese Weise kann nicht nur ein Transport der Kunststoffvorformlinge erreicht werden, sondern auch eine Hub- und Senkbewegung insbesondere in der Längsrichtung der Kunststoffvorformlinge.

Die vorliegende Erfindung ist weiterhin auf eine Transporteinrichtung zum Transportieren von Behältnissen und insbesondere von Kunststoffvorformlingen gerichtet, welche wenigstens eine Halteeinrichtung und bevorzugt eine Vielzahl von Halteeinrichtungen der oben beschriebenen Art aufweist.

Bei einer weiteren vorteilhaften Ausführungsform sind die Halteeinrichtungen wenigstens teilweise aus einem Material hergestellt, welches nicht oder wenig durch Mikrowellen erwärmbar ist. Vorteilhaft ist dieses Material aus einer Gruppe von Materialien ausgewählt, welche beispielsweise PTFE, PEI, PP, AL2O3 oder dergleichen enthält.

Bei einer weiteren vorteilhaften Ausführungsform weist die Vorrichtung eine Abschirmeinrichtung auf, welche ein Austreten von Mikrowellen aus der Applikatoreinrichtung wenigstens teilweise verhindert.

Diese Abschirmeinrichtung dient insbesondere zu dem Zweck, den Austritt von Mikrowellen aus der Applikatoreinrichtung abzuschirmen und/oder zu reduzieren. Bei einer bevorzugten Ausführungsform ist diese Abschirmeinrichtung mehrstufig, bevorzugt also wenigstens zweistufig aufgebaut. Bevorzugt ist daher die Abschirmeinrichtung aus mehreren Elementen bzw. Abschirmeinheiten aufgebaut. Bevorzugt weist die Abschirmeinrichtung daher wenigstens zwei Abschirmeinheiten auf, welche bevorzugt jeweils der Abschirmung von Mikrowellen dienen und die bevorzugt in einer Laufrichtung der Mikrowellen hintereinander angeordnet sind.

Bevorzugt sind dabei diese Abschirmeinheiten unterschiedlich aufgebaut und bewirken eine Abschirmung der Mikrowellen auf Grundlage unterschiedlicher Prinzipien. Dabei sind die Abschirmeinheiten bevorzugt aus einer Gruppe von Abschirmeinheiten ausgebildet, welche Cutoffelemente (bzw. Cutoffstrukturen), Chokes, Absorber und strahlungsdichte Strukturen enthält.

Im Rahmen der Cutoffstruktur wird der Hohlleiter örtlich soweit verengt, dass ein Teil der Mikrowellen nicht auskoppelt und/oder ausbreitungsfähig sind und somit abgeschirmt und/oder gedämpft. Im Rahmen der Chokeeinrichtung werden die Mikrowellen bevorzugt durch destruktive Interferenz abgeschirmt und/oder gedämpft. Im Rahmen des Absorbers werden Mikrowellen in Fluiden oder Festkörpern absorbiert. Unter strahlungsdichten Strukturen fallen metallisch leitende Flächen oder Gitter mit einer Maschenweite, die sehr viel kleiner als die Wellenlänge ist.

Bevorzugt ist die Abschirmeinheit wenigstens dreistufig aufgebaut. Bei einer weiteren bevorzugten Ausführungsform schließt sich an die Applikatoreinrichtung zunächst eine Cutoffstruktur an. Bevorzugt schließt sich an diese Cutoffstruktur eine Chokeeinrichtung als zweite Abschirmeinheit an. Bevorzugt ist wenigstens eine Abschirmeinheit unmittelbar an der Applikatoreinrichtung angeordnet. Besonders bevorzugt ist die Cutoffstruktur und/oder die Chokeeinrichtung insbesondere an der Applikatoreinrichtung angeordnet.

Bei einer weiteren bevorzugten Ausführungsform weist wenigstens eine Abschirmeinrichtung und/oder eine Stufe der Abschirmeinrichtung eine Struktur einer Vielzahl von Vorsprüngen auf. Diese Vorsprünge können dabei als Stäbe ausgebildet sein, bevorzugt als Stäbe oder Vorsprünge, die sich senkrecht zu einer Längsrichtung der Kunststoffvorformlinge erstrecken.

Bevorzugt sind diese Vorsprünge regelmäßig ausgebildet und weisen insbesondere regelmäßige Abstände zueinander auf. Dabei wäre es möglich, dass diese Vorsprünge untereinander gleichartig ausgebildet sind. Auch könnten die Vorsprünge in einer Ebene angeordnet sein.

Bei einer weiteren bevorzugten Ausführungsform weist die Cutoffstruktur eine hohlleiterartige Vertiefung auf, die die Funktion einer Lambda-Viertel-Falle hat.

Wie oben erwähnt, weist die Applikatoreinrichtung bevorzugt einen Schlitz auf, durch welchen hindurch die Kunststoffvorformlinge geführt sind. Vorteilhaft weist die Applikatoreinrichtung auch an einem Anfangsbereich und einem Endbereich eine Öffnung auf, nämlich in dem Eintrittsbereich der Kunststoffvorformlinge und in dem Austrittsbereich der Kunststoffvorformlinge. Prinzipiell kann aus diesen Schlitzen bzw. Öffnungen Mikrowellenstrahlung austreten, was nach Möglichkeit verhindert werden sollte.

Die folgenden Maßnahmen, die dazu dienen, zu verhindern, dass Mikrowellen aus dem Applikator und/oder Resonator austreten, können auch ohne die oben beschriebene Erfindung Anwendung finden, das heißt insbesondere ohne das Merkmal, dass Rotationseinrichtungen zum Drehen der Kunststoffvorformlinge vorhanden sind und/oder dass die Transporteinrichtung wenigstens teilweise außerhalb der Applikationseinrichtung angeordnet ist. Diese Maßnahmen dienen dazu, das Auftreten von Mikrowellen außerhalb des Gehäuses der Maschinen oder der Applikatoreinrichtung zu reduzieren und insbesondere auf einen Wert zu reduzieren, der kleiner ist als 10 mW/cm² , bevorzugt kleiner 2,5 mW/cm² in einem Wellenlängenbereich von 915 MHz.

Bevorzugt ist wenigstens ein Bereich der Applikatoreinrichtung und bevorzugt wenigstens eine Wandung der Applikatoreinrichtung wenigstens teilweise mit einer Vielzahl von Vorsprüngen ausgestattet, welche die Mikrowellenleckage verhindert. Diese Wandung reicht besonders bevorzugt über den Schlitz, durch welchen die Kunststoffvorformlinge geführt werden, hinaus. Vorteilhaft erstreckt sich diese Wandung mit den Vorsprüngen über sämtliche der genannten Schlitze bzw. Öffnungen der Applikatoreinrichtung hinaus. Bei diesen Vorsprüngen, im Folgenden auch als Chokes (Drosseln) bezeichnet, handelt es sich um eine Vielzahl von Vorsprüngen, welche bevorzugt ausgehend von dieser Wandung senkrecht zu dem Schlitz und/oder senkrecht zu der Transportrichtung der Kunststoffvorformlinge weisen.

Diese Vorsprünge können dabei jeweils stiftartig ausgebildet sein und in Richtung des Transportpfads der Kunststoffvorformlinge weisen. Bei einer bevorzugten Ausführungsform ist daher die Wandung der Applikatoreinrichtung bevorzugt wenigstens eine und besonders bevorzugt genau eine Wandung der Applikatoreinrichtung mit einer Vielzahl derartiger Vorsprünge ausgestattet. Bevorzugt ist zumindest und besonders bevorzugt nur ein Bereich dieser Wandung mit Vorsprüngen ausgestattet, der außerhalb der Applikatoreinrichtung bzw. außerhalb desjenigen Bereichs, in dem die Kunststoffvorformlinge erwärmt werden.

Vorteilhaft bestehen diese Vorsprünge bzw. Strukturen aus Metall (oder ggfs. aus dielektrischen Materialien), um den Austritt von Mikrowellen zu vermeiden. Zusätzlich oder alternativ können Mikrowellen absorbierende Strukturen eingesetzt werden. Bei einer bevorzugten Ausführungsform ist das Material des Kanals bzw. des Spalts, durch den die Kunststoffvorformlinge transportiert werden, als Kombination aus Chokes und Strukturen aus absorbierendem Material gebildet.

Bevorzugt kann es sich hierbei um dielektrische und/oder metallische Materialien handeln. Bei einer bevorzugten Ausführungsform sind diese Vorsprünge aus einer Vielzahl von Reihen von metallischen Vorsprüngen ausgebildet. Bevorzugt sind Cutoffwellenleiter und/oder Cutoffstrukturen vorgesehen mit Dimensionen, die von der Frequenz abhängen und die eine Weiterverbreitung der Wellen verhindern. Diese Cutoffstrukturen könnten beispielsweise durch einen engen Schlitz ausgeführt sein. Bei einer weiteren bevorzugten Ausführungsform sind Absorberstrukturen vorhanden, welche eine hohe Absorption für die Wellen bieten und welche die Strahlung reduzieren. Diese Absorberstrukturen könnten sich an die Cutoffstrukturen anschließen.

Bevorzugt ragen jedoch diese Vorsprünge nicht in die eigentliche Applikationseinrichtung bzw. in den Bereich, in dem die Kunststoffvorformlinge eigentlich erwärmt werden, hinein. Vorteilhaft ragt jedoch die Wandung über die besagten Schlitze hinaus und in diesen über die Schlitze hinausragenden Bereichen sind die genannten Vorsprünge angeordnet.

Alternativ oder zusätzlich können auch andere Absorbereinrichtungen und/oder Schutzeinrichtungen vorgesehen sein, welche bevorzugt nicht mit der Applikatoreinrichtung verbunden sind. Bei dieser Ausführungsform ist der engere Bereich des Gehäuses mit Strukturen aus absorbierenden Materialien (dabei könnte es sich etwa auch um gitterartige Strukturen handeln) ausgebildet, welche die austretende Mikrowellenstrahlung absorbieren, welche aus dem Kanal der Applikatoreinrichtung austritt.

Die Komponenten des Gehäuses sind derart ausgestaltet, dass sie die Mikrowellenstrahlung unter den gesetzlich zulässigen Grenzbereich reduzieren.

Bevorzugt sind die Eintritts- und Austrittsschlitze des Gehäuses mit Vorsprüngen ausgestattet, welche die Mikrowellenleckage auf den gesetzlich zulässigen oben genannten Wert reduzieren. Der Eintritts- und Austrittsbereich des Gehäuses ist bevorzugt mit einer Kombination von Vorsprüngen und Strukturen aus absorbierenden oder nicht absorbierenden Materialien ausgestattet, um die Mikrowellenleckage zu reduzieren. Weiterhin ist bevorzugt der Kanal der Applikatoreinrichtung mit zusätzlichen Cutoffwellenleitern bzw. Cutoffstrukturen ausgestattet, um die Leckage von Mikrowellen zu reduzieren.

Bei einer weiteren vorteilhaften Ausführungsform weist die Vorrichtung eine Abstimmeinrichtung (im Folgenden auch als Tuner bezeichnet) auf, welche u.a. zur Regulierung einer Erwärmungsleistung für die Kunststoffvorformlinge geeignet und bestimmt ist. Um die Resonanzfrequenz der Applikatoreinrichtung auf unterschiedlichen Füllniveaus mit Kunststoffvorformlingen einzustellen und insbesondere an die Frequenz der Mikrowelle anzupassen, sind Abstimmeinrichtungen (Tuner) vorgesehen. Diese Abstimmeinrichtungen können dabei bevorzugt in einem Kanal, der sich an die Applikatoreinrichtung anschließt, vorhanden sein.

Bei einer bevorzugten Ausführungsform ist die Abstimmeinrichtung dazu geeignet und bestimmt, eine Resonanzfrequenz des Applikators und eine Sendefrequenz der Mikrowellenerzeugungseinrichtung aufeinander abzustimmen. Besonders bevorzugt erfolgt dabei diese Abstimmung durch eine Veränderung und/oder Anpassung der Resonanzfrequenz. Damit weist die Abstimmeinrichtung bevorzugt Mittel auf, welche dazu geeignet und bestimmt sind, eine Änderung der Resonanzfrequenz zu bewirken.

Unter der Resonanzfrequenz wird insbesondere diejenige Frequenz verstanden mit der die Mikrowellen auf die Kunststoffvorformlinge aufgebracht werden und/oder diejenige Frequenz, die sich bei einem wenigstens teilweise und bevorzugt vollständig (mit Kunststoffvorformlingen) gefüllten Applikator bzw. Resonator ergibt. Bevorzugt ist diese Resonanzfrequenz abstimmbar.

Die Sendefrequenz ist diejenige Frequenz, mit der die Mikrowellenerzeugungseinrichtung strahlt. Diese Sendefrequenz ist zumindest bei Verwendung eines Magnetrons nicht veränderbar bzw. nicht kontrolliert veränderbar (kann sich jedoch bei einer Leistungsänderung ändern). Bei Verwendung einer Solid State - Mikrowellenquelle kann die Sendefrequenz auch veränderbar sein.

Bevorzugt erfolgt die Anpassung bzw. Abstimmung für gefüllte oder teilgefüllte Applikatoreinrichtungen. Zu teilgefüllten Applikatoreinrichtung kann es insbesondere bei Anlaufprozessen oder bei Entleerprozessen kommen, bei denen entweder (etwa nach Betriebsbeginn) neue Kunststoffvorformlinge der Applikatoreinrichtung zugeführt werden oder die Applikatoreinrichtung leergefahren wird. Dabei kann die Anpassung beziehungsweise Abstimmung abhängig von dem Beladungszustand des Applikators und/oder physikalischen Größen des Mikrowellenfeldes geregelt und/oder gesteuert werden.

Allgemein hängt die Erwärmungsleistung von mehreren Einflussfaktoren ab, insbesondere der zur Verfügung stehenden Mikrowellenleistung, einer Blendeneinstellung, einer Kopplung, einer Tunereinstellung, einem Material und einer Temperatur des Kunststoffvorformlings und einer Transportgeschwindigkeit.

Dabei können bevorzugt unterschiedliche Abstimmkonzepte vorgesehen sein. So können beispielsweise langsame Abstimmkonzepte vorgesehen sein, welche für den kompletten Frequenzbereich geeignet sind und welche teilweise gefüllte und auch vollständig gefüllte Applikatoreinrichtungen versorgen können. Auch können diese Abstimmkonzepte die Erwärmung von Kunststoffvorformlingen mit geringer Masse und auch von Kunststoffvorformlingen mit hohen Massen ermöglichen. In diesem Fall kann die Abstimmeinrichtung einen beweglichen Block aus dielektrischem Material aufweisen, der bevorzugt am hinteren Ende des Applikators angeordnet wird (im Bereich des letzten Maximums des stehenden Wellenmusters der Applikatoreinrichtung).

Daneben kann ein schnelles Abstimmeinrichtungskonzept vorgesehen sein, welches für einen begrenzten Frequenzbereich vorgesehen ist, um das sich schnell ändernde Auseinanderlaufen zwischen der Resonanzfrequenz der Applikatoreinrichtung und der Mikrowellenquelle zu kompensieren. Dieses kann verursacht werden durch ein sich periodisches Ändern der Resonanzfrequenz der Applikatoreinrichtung, wenn die Kunststoffvorformlinge durch die stehende Welle bzw. das stehende Wellenmuster der Applikatoreinrichtung bewegen. Daneben kann dies erreicht werden durch schnelle Änderungen der Zentralfrequenz der Mikrowellenquelle (insbesondere im Fall einer Solid-State-Quelle). Alternativ oder zusätzlich kann eine drehende Struktur dielektrischen und/oder metallischen Materials vorgesehen sein, die bevorzugt nahe an einem Maximum des stehenden Wellenmusters der Applikatoreinrichtung angeordnet ist.

Vorzugsweise ist das Abstimmelement bzw. die Abstimmeinrichtung aus einem Material hergestellt, welches aus einer Gruppe von Materialien ausgewählt ist, welche AL₂O₃, PTFA, PTFE, Quarz, PEI (Polyetherimid), Igus A500 ^{®}, und dergleichen enthält. Bevorzugt wird also ein anpassbarer Metallkurzschluss mit einem Choke vorgesehen, der effektiv die Dimensionen des Resonators oder des Hohlraums bzw. Hohlleiters begrenzt. Bei einer weiteren bevorzugten Ausführungsform ist wenigstens ein Ende der Applikatoreinrichtung in der Transportrichtung offen. Bei einer weiteren bevorzugten Ausführungsform sind beide Enden der Applikatoreinrichtung, das heißt sowohl das Ende in der Transportrichtung der Kunststoffvorformlinge als auch entgegen der Transportrichtung der Kunststoffvorformlinge offen. Auf diese Weise können die Kunststoffvorformlinge einfach und insbesondere auch ohne eine Bewegung in ihrer Längsrichtung in die Applikatoreinrichtung eingeführt werden. Es wäre jedoch auch möglich, dass die Kunststoffvorformlinge in der Weise in die Applikatoreinrichtung eingeführt werden, dass sie in einem Anfangsbereich der Applikatoreinrichtung durch eine Hochbewegung bzw. eine Senkbewegung in diesen eintauchen und am anderen Ende der Applikatoreinrichtung wieder aus dieser herausgezogen werden. Bei dieser Ausführungsform könnte zwar auf zwei Enden der Applikatoreinrichtung bzw. eine Abdämpfung in diesem Bereich verzichtet werden, dafür wäre jedoch eine aufwändigere Mechanik erforderlich, um die Kunststoffvorformlinge in die Applikatoreinrichtung einzuführen.

Bei einer weiteren vorteilhaften Ausführungsform weist die Abstimmeinrichtung wenigstens ein drehbares Abstimmelement (bzw. eine Abstimmstruktur) auf. Besonders bevorzugt weist die Abstimmeinrichtung wenigstens zwei drehbare Abstimmelemente auf, wobei besonders bevorzugt diese Abstimmelemente bezüglich zueinander parallelen Drehachsen drehbar sind.

Besonders bevorzugt sind diese wenigstens zwei Abstimmelemente bezüglich des Transportpfads der Kunststoffvorformlinge gegenüberliegend angeordnet und/oder der Transportpfad der Kunststoffvorformlinge verläuft zwischen diesen beiden Abstimmelementen. Besonders bevorzugt sind die Abstimmelemente symmetrisch bezüglich des Transportpfads der Kunststoffvorformlinge angeordnet.

Bei einer weiteren Ausführungsform sind mehr als zwei derartige Abstimmelemente vorgesehen. Besonders bevorzugt sind wenigstens vier, bevorzugt wenigstens sechs derartige Abstimmelemente vorgesehen.

Bei einer weiteren bevorzugten Ausführungsform ist eine geradzahlige Anzahl derartiger Abstimmelemente vorgesehen. Bei einer weiteren vorteilhaften Ausführungsform liegen sich jeweils zwei Abstimmelemente bezüglich des Transportpfads der Kunststoffvorformlinge gegenüber.

Bei einer weiteren bevorzugten Ausführungsform sind die einzelnen Abstimmelemente unabhängig voneinander drehbar. Dabei ist es jedoch auch möglich und bevorzugt, dass die Drehungen zweier Abstimmelemente, die sich bezüglich des Transportpfads der Kunststoffvorformlinge gegenüberliegen hinsichtlich ihrer Drehung miteinander gekoppelt sind, wobei diese Kopplung sowohl mechanisch erfolgen kann als auch über die Steuerung der jeweiligen Antriebseinrichtungen der Abstimmeinrichtungen Bei diesen Antriebseinrichtungen kann es sich insbesondere um elektromotorische Antriebseinrichtungen handeln. Durch eine derartige Kopplung kann erreicht werden, dass die sich bezüglich des Transportpfades gegenüberliegenden Abstimmelemente stets in einer entsprechenden bzw. ebenfalls symmetrischen Drehstellung befinden.

Bei einer weiteren bevorzugten Ausführungsform ist das wenigstens eine Abstimmelement bezüglich einer Drehachse drehbar, welche parallel zu einer Längsrichtung der zu erwärmenden Kunststoffvorformlinge ist

Bei einer weiteren bevorzugten Ausführungsform ist wenigstens ein Abstimmelement und sind bevorzugt mehrere Abstimmelemente und sind bevorzugt alle Abstimmelemente in einem Bereich der Applikatoreinrichtung angeordnet, der sich nahe an einem Maximum des stehenden Wellenmusters der Applikatoreinrichtung befindet. Unter einem sich nahe an dem Maximum befinden wird verstanden, dass der Abstand zwischen dem Abstimmelement und/oder dessen geometrischer Drehachse einerseits und dem Maximum kleiner ist als der Abstand zwischen dem Abstimmelement und/oder dessen geometrischer Drehachse einerseits und dem Minimum des stehenden Wellenmusters. Bevorzugt ist der Abstand zu dem Maximum weniger als halb so groß wie der Abstand zu dem Minimum, bevorzugt weniger als ein Drittel so groß und bevorzugt weniger als ein Viertel so groß und besonders bevorzugt weniger als ein Fünftel so groß.

Bevorzugt können die Abstimmelemente bzw. Strukturen sowohl pro Maximum als auch pro Seite der Applikatoreinrichtung unterschiedlich oder synchron gedreht werden. Besonders bevorzugt ist eine Ausführungsform, bei der die Symmetrie in Bezug auf die Achse in Transportrichtung des Transportpfads beibehalten ist.

Bei einer weiteren bevorzugten Ausführungsform sind die Abstimmelemente aus einem dielektrischen und/oder metallischen Material hergestellt.

Bei einer weiteren bevorzugten Ausführungsform weisen die Abstimmelemente einen kreissegmentförmigen Querschnitt auf und insbesondere einen halbkreisförmigen Querschnitt.

Bei einer weiteren bevorzugten Ausführungsform ist das wenigstens eine Abstimmelement und sind bevorzugt mehrere Abstimmelemente in eine Wandung integriert. Dabei kann diese Wandung Ausnehmungen aufweisen, in welchen die Abstimmelemente eingebaut sind. So könnten die Wandungen Lücken aufweisen, in denen sich jeweils die Drehachsen der Abstimmelemente befinden.

So wäre es denkbar, dass die Abstimmelemente einen halbkreisförmigen Querschnitt aufweisen und je nach Drehstellung mehr oder weniger weit in die Wandung eingefahren sind. So könnte in einer Drehstellung der halbkreisförmige Querschnitt vollständig aus der Wandung herausragen und in einer weiteren Drehstellung vollständig in die Wandung eingefahren sein.

Bevorzugt sind die Abstimmelemente um einen Drehwinkel drehbar, der größer ist als 90°, bevorzugt größer als 180°, bevorzugt größer als 210°, bevorzugt größer als 240°, bevorzugt größer als 270° und besonders bevorzugt größer als 300°.

Bevorzugt sind die Abstimmelemente um einen Drehwinkel drehbar, der kleiner ist als 370°, bevorzugt kleiner als 360°, bevorzugt kleiner als 350°, bevorzugt kleiner als 340°, bevorzugt kleiner als 330° und besonders bevorzugt kleiner als 320°.

Bei einer weiteren bevorzugten Ausführungsform ist die Wandung ebenfalls aus einem dieelektrischen und/oder einem metallischen Material bestehen. Bei einer bevorzugten Ausführungsform ist auch die besagte Wandung innerhalb der Applikatoreinrichtung angeordnet.

Bei einer weiteren bevorzugten Ausführungsform erstreckt sich die besagte Wandung entlang der Transportrichtung der Kunststoffvorformlinge. Bei einer weiteren bevorzugten Ausführungsform erstreckt sich die Wandung in der Längsrichtung der Kunststoffvorformlinge.

Bei einer weiteren bevorzugten Ausführungsform ist wenigstens ein Abstimmelement vorgesehen, welches gegenüber der Applikatoreinrichtung in seiner Längsrichtung bewegbar ist. So kann das wenigstens eine Abstimmelement und können bevorzugt die mehreren Abstimmelemente bevorzugt in eine Öffnung eingefahren und/oder aus der Applikatoreinrichtung herausgezogen werden.

Dabei kann die Verschiebung bzw. das Einfahren dieser Abstimmelemente erfolgen wie im Fall eines 3 Stub Tuners.

Bevorzugt sind mehrere derartiger Abstimmelemente vorgesehen, wie oben beschrieben wobei diese wiederum symmetrisch bezüglich des Transportpfads angeordnet sein können und auch im Übrigen so ausgeführt sein können wie oben für die drehbaren Abstimmelemente beschrieben. Dabei ist es auch möglich, dass sich diese Abstimmelemente in der Nähe der Maxima des elektrischen Feldes befinden.

Auch wäre es möglich, dass die Abstimmelemente sowohl drehbar als auch in ihrer Längsrichtung bewegbar sind.

Bei einer weiteren bevorzugten Ausführungsform ist die Applikatoreinrichtung dazu geeignet und bestimmt, auf die Kunststoffvorformlinge ein sich in deren Längsrichtung änderndes Temperaturprofil aufzubringen. So wäre es möglich, dass einige Bereiche der Kunststoffvorformlinge stärker erwärmt werden als andere Bereiche, etwa ein Bodenbereich stärker erwärmt wird als ein zentraler Bereich der Kunststoffvorformlinge. Eine derartige Ausgestaltung kann insbesondere für einen nachgeordneten Umformungsprozess mittels einer Streckblasmaschine vorteilhaft sein.

Bei einer weiteren vorteilhaften Ausführungsform weist die Applikatoreinrichtung metallische und/oder dielektrische Elemente auf, wobei bevorzugt diese metallischen und/oder dielektrischen Elemente austauschbar sind und/oder eine Position dieser Elemente veränderbar ist. Diese metallischen und/oder dielektrischen Elemente dienen dabei insbesondere dazu, um gezielt eine Feldveränderung zu bewirken, um auf die Kunststoffvorformlinge ein sich in deren Längsrichtung änderndes Feld aufzubringen, um so die Kunststoffvorformlinge in deren Längsrichtung unterschiedlich zu erwärmen.

Bei einer weiteren bevorzugten Ausführungsform sind diese Elemente bewegbar, insbesondere verschiebbar und/oder drehbar. Bevorzugt weist die Vorrichtung wenigstens eine Antriebseinrichtung zum Bewegen dieser Elemente auf. Insbesondere handelt es sich dabei um einen elektromotorischen Antrieb. Weiterhin ist es denkbar, dass diese Elemente austauschbar sind, um so die Anpassbarkeit der Applikatoreinrichtung zu erreichen.

Bei einer weiteren vorteilhaften Ausführungsform ist eine Position und/oder Lage der metallischen und/oder dielektrischen Elemente geregelt veränderbar. So ist es denkbar, dass eine Regelung und/oder Steuerung der Applikatoreinrichtung vorgesehen ist, welche etwa in Reaktion auf ein gewünschtes Temperaturprofil der Kunststoffvorformlinge die Position und/oder Lage der metallischen und/oder dielektrischen Elemente ändert und insbesondere den oben erwähnten Antrieb ansteuert, der diese Elemente bewegt. Diese Regelung könnte dabei in eine Gesamtregelung der Anlage integriert sein.

Bei einer weiteren vorteilhaften Ausführungsform weist die Vorrichtung wenigstens eine erste Sensoreinrichtung auf, welche eine Temperatur der Kunststoffvorformlinge erfasst. Besonders bevorzugt ist diese Sensoreinrichtung dazu geeignet und bestimmt, die Erwärmung bzw. Temperatur der Kunststoffvorformlinge berührungslos zu erfassen. Besonders bevorzugt ist diese Sensoreinrichtung dazu geeignet und bestimmt, die Temperatur der Kunststoffvorformlinge während deren Bewegung zu erfassen. Besonders bevorzugt handelt es sich bei der Sensoreinrichtung um ein sogenanntes Pyrometer.

Bei einer weiteren vorteilhaften Ausführungsform weist die Vorrichtung wenigstens eine zweite Sensoreinrichtung auf, welche eine Temperatur der Kunststoffvorformlinge erfasst. Vorteilhaft sind die erste Temperaturmesseinrichtung und die zweite Temperaturmesseinrichtung an verschiedenen Positionen entlang des Bewegungspfads der Kunststoffvorformlinge angeordnet. Auf diese Weise kann auch ein Temperaturgradient bzw. eine Erwärmung der Kunststoffvorformlinge bestimmt werden. Diese Daten können wie oben erwähnt zur Steuerung und/oder Regelung der Vorrichtung eingesetzt werden.

Bei einer besonders bevorzugten Ausführungsform weist die Vorrichtung eine Steuerungseinrichtung auf, welche eine Steuerung und insbesondere eine Regelung der Erwärmungseinrichtung und insbesondere eine Echtzeitregelung ermöglicht. Genauer gesagt kann dabei auch die Leistung der Erwärmungseinrichtungen bzw. der Applikatoreinrichtung genau auf die Rotation, Bewegung und Temperatur der Kunststoffvorformlinge abgestimmt sein.

Bei einer bevorzugten Ausführungsform weist die Vorrichtung wenigstens eine, bevorzugt zwei oder mehrere, beispielsweise drei Mikrowellenapplikatoreinrichtungen auf. Dabei ist es denkbar, dass die Temperatur mit einem Pyrometer oder einer IR-Kamera beispielsweise am Einlauf, in einer Applikatoreinrichtung, zwischen den Applikatoreinrichtungen oder nach den Applikatoreinrichtungen gemessen wird.

Da der dielektrische Verlustfaktor temperaturabhängig ist, ist es von Vorteil, wenn die Temperatur der Kunststoffvorformlinge vor der Prozessierung mit der MW-Erwärmungsvorrichtung in einem begrenzten Temperaturbereich liegt. Dies kann beispielsweise durch eine Vortemperierung geschehen, welche sowohl mit Mikrowellen, aber auch mit Warmluft, IR-Strahlung oder Laser stattfinden kann. So können beispielsweise die Kunststoffvorformlinge in einer ersten Erwärmungsstufe vortemperiert und auf die gleiche Temperatur gebracht werden. Es wäre auch eine nachträgliche Temperierung möglich d.h. eine Temperierung nach der hier beschriebenen Temperierung mit Mikrowellen möglich. Auch wäre eine zeitgleiche und/oder kombinierte Temperierung möglich.

Dazu ist es beispielsweise möglich, dass mittels einer ersten Sensoreinrichtung, wie beispielsweise einem ersten Pyrometer, die Temperatur der Kunststoffvorformlinge vor einem ersten Applikator gemessen wird, anschließend wird in diesem ersten Applikator die Leistung und/oder Verweildauer der Kunststoffvorformlinge so angepasst, dass nach der ersten Applikatoreinrichtung ein gleichmäßig temperierter Strom an Kunststoffvorformlingen ankommt. Dies kann gegebenenfalls mit einer zweiten Sensoreinrichtung überprüft werden. In nachfolgenden Applikatoreinrichtungen kann dann das gewünschte restliche Temperaturprofil aufgebracht werden. Dabei kann eine Steuerung vorgesehen sein, welche sowohl zentral als auch dezentral angebracht ist und die Anlage steuert und bevorzugt regelt.

Bevorzugt weist die Vorrichtung eine weitere Sensoreinrichtung auf, welche eine Temperatur der Kunststoffvorformlinge bestimmt. Dabei ist es möglich, dass, nachdem die Kunststoffvorformlinge die letzte Temperiereinrichtung (IR-Ofen, Mikrowellenofen, Laser, Heißluft, Kühlluft oder Temperierplatten) verlassen haben, nochmals das Temperaturprofil gemessen wird und anschließend das Behältnis streckgeblasen wird. Anschließend kann das so geblasene Behältnis nochmals überprüft werden, beispielsweise im Hinblick auf eine Wandungsdickenverteilung.

Bei einer bevorzugten Ausführungsform weist daher die Vorrichtung auch eine der Erwärmungseinrichtung nachgeordnete Blasformeinrichtung, wie insbesondere eine Streckblasmaschine auf. Weiterhin weist die Vorrichtung bevorzugt auch eine Überprüfungseinrichtung auf, welche dazu geeignet und bestimmt ist, die fertig geblasenen Behältnisse zu überprüfen und insbesondere im Hinblick auf eine Wandstärkenverteilung zu überprüfen.

Es ist dabei möglich, dass sämtliche Daten, wie insbesondere eine Einlauftemperatur, eine Zwischentemperatur, Tuningstellungen, eine vor- und rücklaufende Leistung, eine Position der Temperierelemente, eine Frequenz, eine Auslauftemperatur, Heizerstellgrößen, eine zusätzliche Kühlung, eine Blaskurvenaufzeichnung, eine Reckkraft und auch die Daten einer Auslaufkontrolle speziell der Wandstärke in einem oder mehreren IPCs aufgenommen werden und zur Selbstregulierung des Prozesses verwendet werden. So ist es möglich, dass bei einer Abweichung der Zielwandstärke in einem gewissen Bereich ein Temperierelement in einer Applikationseinrichtung verstellt werden muss, um wieder das gewünschte Wandstärkenprofil zu erreichen. Insbesondere jedoch die Endtemperatur vor dem Streckblasvorgang kann als wichtige Regelgröße genutzt werden, da hier der reine Heizprozess betrachtet wird und nur dessen Auswirkungen auf die endgültige Behältnisqualität.

Bei einer weiteren vorteilhaften Ausführungsform weist die Vorrichtung eine Sensoreinrichtung auf, welche dazu geeignet und bestimmt ist, austretende Mikrowellen zu erfassen. Insbesondere sollen dabei Mikrowellen detektiert werden, welche (ungewollt) aus der Applikatoreinrichtung austreten.

Grundsätzlich soll die Applikatoreinrichtung so ausgeführt sein, dass keine kritische Mikrowellenleckage entsteht. Sollte diese doch entstehen, ist es vorteilhaft, beispielsweise eine metallisch leitende Schutzeinhausung um das System zu bauen. Mit einem derartigen Leckagemessgerät kann nun gemessen werden, ob sich Mikrowellenenergie innerhalb der Schutzeinrichtung befindet. Überschreitet diese einen voreingestellten Grenzwert, wird die Mikrowellenenergie abgeschaltet. Es ist jedoch auch denkbar, noch eine zweite Messeinrichtung zur Messung von Leckagen außerhalb der Schutzeinrichtung zu verbauen. Diese kann einen gesetzlichen Grenzwert überwachen und auch diese kann bei Überschreiten eines voreingestellten Schwellenwerts das System abschalten. Vorteilhaft weist daher die Vorrichtung eine erste Leckagemesseinrichtung und eine zweite Leckagemesseinrichtung auf.

Bei einer weiteren vorteilhaften Ausführungsform weist die Vorrichtung eine Sensoreinrichtung auf, welche Störungen und insbesondere Plasmabögen erfasst.

Da PET einen niedrigen dielektrischen Verlustfaktor hat wird in der Applikatoreinrichtung eine hohe Felddichte benötigt. Diese wiederum kann zur Plasmazündung und zur Mikrowellenleckage führen. Um bei einer Plasmazündung keinen Schaden in der Applikatoreinrichtung hervorzurufen, wird also vorgeschlagen, eine Detektor- bzw. Sensoreinrichtung (insbesondere aber nicht ausschließlich eine Fotodiode) in die Applikatoreinrichtung bzw. den Resonator blicken zu lassen, um mögliche Plasmazündungen sofort zu detektieren.

In diesem Falle kann eine Steuerungseinrichtung bewirken, dass die Mikrowellenenergiezufuhr abgeschaltet wird. Bevorzugt reagiert eine derartige Steuerungseinrichtung innerhalb von 100 µs vorzugsweise innerhalb von 10 µs. Dabei ist es möglich, dass jeder Applikatoreinrichtung eine derartige Sensoreinrichtung zugeordnet ist. Es wäre jedoch auch möglich, dass mehrere Applikatoreinrichtungen mittels einer Sensoreinrichtung geschützt werden.

Es wäre auch möglich, dass eine Energiezufuhr kurzzeitig verringert wird bzw. ausgeschaltet wird, um ggf. Fäden oder Unreinheiten am Anspritzpunkt verbrennen zu lassen und bei neuem Einschalten kein Plasma mehr zu haben. Auch könnte eine Ausschleusung von Kunststoffvorformlingen erfolgen.

Bei einer weiteren vorteilhaften Ausführungsform weist die Vorrichtung eine Sensoreinrichtung auf, welche eine geometrische Gestalt der Kunststoffvorformlinge und insbesondere aber nicht ausschließlich eine Preformlänge oder einen Preformdurchmesser erfasst. Auch kann eine Erfassung dahingehend erfolgen, ob ein Kunststoffvorformling vorhanden ist. Bei einer Mikrowellenerwärmungseinrichtung ist es vorteilhaft, nahe an der Kuppe der Kunststoffvorformlinge Funktionselemente im Resonator zu platzieren. Daher kann es nachteilhaft sein für das System, wenn die Kunststoffvorformlinge zu lang sind. Es wird daher im Rahmen dieser Ausgestaltung vorgeschlagen, eine Inspektionseinrichtung der eigentlichen Erwärmungseinrichtung vorzuschalten. Diese kann beispielsweise physikalische Eigenschaften, wie eine Länge, eine Dicke, dielektrische Eigenschaften, Verschmutzungen, fehlerhafte Kunststoffvorformlinge, Fäden am Anspritzpunkt, deformierte Mundstücke, einen schiefen Sitz in den Halteeinrichtungen und dergleichen erkennen.

Besonders bevorzugt kann weiterhin eine Auswurfeinrichtung vorgesehen sein, welche die betreffenden Kunststoffvorformlinge vor der Einfahrt in die Applikatoreinrichtung auswirft. Ein derartiges Inspektionssystem kann beispielsweise eine Lichtschranke, eine Kamera, ein induktives oder kapazitives Messgerät oder ein kleiner Messresonator sein oder eines oder mehrere dieser Elemente beinhalten.

Eine Lichtschranke oder ein mechanischer Taster, der unter dem Strom der Kunststoffvorformlinge hindurchblickt, kann auch noch vorhanden sein, während der Kunststoffvorformling sich in der Aufheizung befindet. Dieser kann auch ein Abrutschen von einer Halteeinrichtung detektieren und beispielsweise auch die Maschine anhalten.

Bei einer weiteren vorteilhaften Ausführungsform weist die Vorrichtung eine Kühleinrichtung, insbesondere zum Kühlen der Mikrowellenerzeugung und/oder der Applikatoreinrichtung auf. Hierzu kann bevorzugt eine Flüssigkeitskühlung vorgesehen sein. Bei einer bevorzugten Ausführungsform weist die Vorrichtung eine Sensoreinrichtung und insbesondere einen Durchflusswächter auf, der diese Kühlung überwacht.

So ist es beispielsweise möglich, dass ein Abschalten erfolgt, wenn die Temperatur einer Applikatoreinrichtung oder einer Mikrowellenerzeugungseinrichtung über einen vorgegebenen Grenzwert steigt.

Bei einer weiteren vorteilhaften Ausführungsform weist die Vorrichtung eine Kühleinrichtung zum Kühlen eines Mündungsbereichs des Kunststoffvorformlings auf. Dabei kann beispielsweise eine Luftkühlung vorgesehen sein, welche den Mündungsbereich des Kunststoffvorformlings mit kühler Luft beaufschlagt. Es könnten jedoch auch andere Bereich des Kunststoffvorformlings gekühlt werden.

Bei einer weiteren vorteilhaften Ausführungsform ist die Applikatoreinrichtung derart gestaltet, dass sie in der Längsrichtung der Kunststoffvorformlinge ein Temperaturprofil ermöglicht, das heißt, dass unterschiedliche Temperaturbereiche in unterschiedlichen Längsrichtungsbereichen der Kunststoffvorformlinge aufgebracht werden. Dies kann insbesondere durch eine Modifikation des elektrischen Feldes innerhalb der Applikatoreinrichtung möglich sein. Dies kann etwa durch fest verbaute oder verstellbare dielektrische und/oder metallische Funktionselemente, die sich im Applikator befinden, erreicht werden. Derartige Funktionselemente können bevorzugt wie Garniturenteile ausgewechselt werden. Eine Verstellung kann motorisch erfolgen und bevorzugt auch durch eine Regelung bewirkt werden, um ein gewünschtes Temperaturprofil zu erreichen.

Im Hinblick auf das Maschinen-Layout wäre es auch möglich, die vorliegende Erwärmungseinrichtung als Rundläufer auszugestalten und in dem Fall eine Applikatoreinrichtung vorzusehen, welche ein kreisförmiges Profil aufweist.

Bei einer weiteren vorteilhaften Ausführungsform weist die Vorrichtung innerhalb der Applikatoreinrichtung angeordnete Funktionselemente auf, die bevorzugt bewegbar sind und die eine Anpassung eines Mikrowellenfeldes innerhalb der Applikatoreinrichtung ermöglichen. Wie oben erwähnt, kann auf diese Weise eine Anpassung an die unterschiedlichen aus dem Stand der Technik bekannten Kunststoffvorformlinge erfolgen.

Bevorzugt weist die Vorrichtung mehrere Funktionselemente auf, die besonders bevorzugt unabhängig voneinander bewegbar und/oder verstellbar sind. Besonders bevorzugt sind die Funktionselement in einer Richtung bewegbar, die senkrecht zu dem Transportpfad der Kunststoffvorformlinge steht oder wenigstens eine Komponente aufweist, die senkrecht zu dem Transportpfad der Kunststoffvorformlinge steht.

Bevorzugt weist die Vorrichtung wenigstens zwei derartige Funktionselemente auf, welche symmetrisch bezüglich des Transportpfads der Kunststoffvorformlinge angeordnet sind.

Bei einer bevorzugten Ausführungsform ist das wenigstens eine Funktionselement und sind bevorzugt wenigstens zwei Funktionselemente derart verstellbar und/oder bewegbar, dass eine Symmetrie in Bezug auf eine Achse in Transportrichtung des Transportpfads der Kunststoffvorformlinge beibehalten wird. Bevorzugt werden diese Funktionselemente auch verfahrensseitig entsprechend bewegt.

Diese Funktionselemente können dabei als plattenartige Körper ausgebildet sein, die innerhalb der Applikatoreinrichtung angeordnet sind. Auch wäre es möglich, dass die Funktionselemente leistenartig ausgebildet sind. Bevorzugt erstrecken sich eine Längsrichtung dieser Funktionselemente entlang des Transportpfads der Kunststoffvorformlinge und/oder senkrecht zu einer Längsachse der Kunststoffvorformlinge.

Bei einer weiteren vorteilhaften Ausführungsform bestehen die Funktionselemente aus wenigstens einem und bevorzugt aus unterschiedlichen metallischen und/oder dieelektrischen Materialien.

Bei einer weiteren bevorzugten Ausführungsform ist das wenigstens eine Funktionselement und sind bevorzugt mehrere Funktionselemente stangenartigen Trägern angeordnet. Bevorzugt wird daher das wenigstens eine Funktionselement in einer von einer Wandung der Applikatoreinrichtung beabstandeten Position gehalten.

Bei einer weiteren bevorzugten Ausführungsform ist wenigstens ein Funktionselement benachbart zu einer Kuppe bzw. einem Endabschnitt und insbesondere einem geschlossenen Endabschnitt der Kunststoffvorformlinge angeordnet. Bei einer besonders bevorzugten Ausführungsform ist wenigstens ein Funktionselement unterhalb der besagten Kuppe der Kunststoffvorformlinge und insbesondere direkt unterhalb dieser Kuppe angeordnet. Bevorzugt ist dabei dieses Funktionselement in einer vertikalen Richtung bewegbar und/oder verstellbar.

Bei einer weiteren vorteilhaften Ausführungsform kann die Erwärmungseinrichtung unterschiedliche Gestaltungen von Hohlleitern aufweisen. So können beispielsweise Rechteck-Hohlleiter vorgesehen sein, Rundhohlleiter, elliptische Hohlleiter, sechseckige Hohlleiter, Steghohlleiter und dergleichen.

Bei einer weiteren vorteilhaften Ausführungsform sind einem Bereich des Schlitzes, durch den Mikrowellen austreten könnten, zusätzliche Schutzelemente vorgesehen. So könnten beispielsweise in diesen Bereichen λ/4 - Fallen vorgesehen sein. Daneben könnten auch Bürsten mit metallischen Borsten vorgesehen sein, welche die Mikrowellenleistung, die aus der Applikationsreinrichtung heraustritt abschwächen.

Bei einer weiteren vorteilhaften Ausführungsform weist die Erwärmungseinrichtung auch ein Infrarot-Heizmodul auf. Dieses Infrarot-Heizmodul kann dabei insbesondere zu einer Vortemperierung der Kunststoffvorformlinge dienen.

Weiterhin weist die Vorrichtung wenigstens eine und bevorzugt eine Vielzahl von Transporteinrichtungen auf, welche dazu geeignet und bestimmt sind, die Kunststoffvorformlinge zu der Applikatoreinrichtung zu transportieren. Dabei kann es sich beispielsweise auch um sogenannte Teilungsverzugssterne handeln, welche dazu geeignet und bestimmt sind, eine Teilung der Kunststoffvorformlinge während deren Transport zu verändern.

Dabei kann teilweise auf aktuelle oder aus dem Stand der Technik bekannte Transportvarianten zurückgegriffen werden, die auch bereits im Infrarotprozess als Standard verwendet werden. Diese Transportvariante kann gegebenenfalls mit Modifikationen auch mit der hier beschriebenen linearen Mikrowellenerwärmungseinheit ausgeführt werden. Dabei wäre es sogar möglich, dass eine Erwärmungseinrichtung mehrere nachfolgende Formmaschinen beispielsweise Blasformmaschinen versorgt. Daneben können derartige Anlagen auch Maschinenteile wie beispielsweise Sterilisationseinrichtungen aufweisen. Wie oben erwähnt, ist bevorzugt die Applikatoreinrichtung stationär angeordnet und die Kunststoffvorformlinge bewegen sich gegenüber der Applikatoreinrichtung.

Es wäre jedoch auch denkbar, dass die Kunststoffvorformlinge stehen und die Applikatoreinrichtung sich bewegt, beispielsweise sich gegenüber den Kunststoffvorformlingen bewegt. Insbesondere bewegen sich jedoch die Applikatoreinrichtung und die Kunststoffvorformlinge relativ zueinander. Diese Bewegung findet dabei insbesondere in einer senkrecht zu der Längsrichtung der Kunststoffvorformlinge stehenden Richtung statt.

Vorteilhaft ist ein Heizprozess der hier beschriebenen Erwärmungseinrichtungen für Kunststoffvorformlinge geeignet, bei denen heißes oder kaltes Füllgut entweder direkt in den Kunststoffvorformling zur Ausformung des Behältnisses gegeben wird, oder aber später das Behältnis mit heißem Medium gefüllt wird und anschließend wieder rückgekühlt wird. Bei einer derartigen Ausführungsform kann sich eine Mikrowellen-Erwärmungseinheit vor einem Zwischenmodul und vor einem Formprozess, beispielsweise einer Blasformmaschine, befinden. Im Rahmen eines sogenannten Hotfill-Prozesses können außerdem auch erhöhte Anforderungen hinsichtlich Preform-Temperaturen und auch einer Erhöhung des kristallinen Anteils des PET-Materials beim Heizen als Besonderheit hinzukommen.

Weiterhin ist es auch denkbar, dass sich an der Erwärmungseinrichtung eine aseptische Blasformmaschine mit oder ohne Isolator anschließt. Dabei kann beispielsweise ein Zwischenmodul vorgesehen sein, welches beispielsweise ein Trockenaseptikmodul, ein Nassaseptikmodul, eine Bestrahlungseinrichtung, welche die Kunststoffvorformlinge mit elektromagnetischer Strahlung bestrahlt, oder dergleichen ist. Dabei ist es möglich, dass die hier beschriebene Erwärmungseinrichtung und/oder ein Zwischenmodul bzw. eine Blasformmaschine durch ein Schott bakteriell gasdicht, flüssigkeitsdicht und ähnlich abgedichtet werden/wird.

Auch wäre es möglich, dass die Erwärmungseinrichtung selbst als steriler Bereich ausgeführt wird und entsprechende Vorkehrungen getroffen werden. Beispielsweise ist ein Filter- oder Reinigungssystem vorgesehen. Daneben kann in diesem Bereich auch eine Trennung zwischen einem Nass- und einem Trockenteil einer Sterilisationsreinrichtung stattfinden.

Ebenfalls denkbar wäre das ein Sterilisationsmittel wie flüssiges H2O2 vor der Erwärmungseinrichtung in den Preform eingebracht wird und dann in der Erwärmungseinrichtung mittels Mikrowelle aktiviert wird.

Als Transport-Einrichtung kommen unterschiedliche Transporteinrichtungen in Betracht. So können, wie oben erwähnt, neben Transportketten auch beispielsweise Shuttles oder als Linearmotor betriebene Mover vorgesehen sein. Auch kann ein Transportband vorgesehen sein.

Die Transportgeschwindigkeit der Kunststoffvorformlinge innerhalb der Applikatoreinrichtung kann ungleichmäßig sein, aber auch gleichmäßig. Eine ungleichmäßige Geschwindigkeit hätte den Vorteil, dass Bereiche in der Applikatoreinrichtung bzw. im Resonator, in denen das E-Feld des Resonators minimal ist, schneller überbrückt werden können als Bereiche mit einem Maximum. Auf diese Weise könnte der Kunststoffvorformling schneller aufgeheizt werden. Alternativ besteht jedoch auch die Möglichkeit einer gleichmäßigen Geschwindigkeit mit der der Kunststoffvorformling durch die Applikatoreinrichtung bewegt wird.

So könnte mit einer Konstruktion gearbeitet werden, die näherungsweise bekannt ist, indem mehrere Kunststoffvorformlinge in einem festen Abstand im Resonator platziert sind (beispielsweise über ein Band oder eine Kette) und über mechanische-pneumatische oder mechatronische Komponenten, wie beispielsweise einen Kettenantrieb, einen Servoantrieb und dergleichen bzgl. der Preform-Längsachse gedreht werden. Alternative Transportmöglichkeiten können, wie oben erwähnt, Mover sein, welche unabhängig voneinander auf einer Magnetbahn oder ähnliches sich bewegen und so ungleichmäßige oder gleichmäßige Bewegungen in der Applikatoreinrichtung realisieren.

Eine ungleichmäßige Bewegung hat den Vorteil, dass beispielsweise Minima eines E-Feldes schneller überbrückt werden können, und so insgesamt die Heizdauer reduziert werden kann. Weiterhin können jedoch mehrere Kunststoffvorformlinge in einem festen Abstand in der Applikatoreinrichtung platziert werden und entsprechend bewegt werden.

Die Rotation der Kunststoffvorformlinge kann beispielsweise über einen zentralen Kettenantrieb oder einen Zahnriemen oder dergleichen (beispielsweise Servoantriebe, elektromechanische Antriebe, pneumatische Antriebe und/oder mechanische Antriebe) erfolgen. Dabei wäre es möglich, dass die einzelnen Kunststoffvorformlinge mit einheitlichen Drehgeschwindigkeiten gedreht werden, wobei diese Drehgeschwindigkeiten jedoch bevorzugt geändert werden können. Dies kann durch entsprechende Bewegungen eines Zahnriemens erreicht werden. Dieser Zahnriemen kann dabei beispielsweise Zahnräder antreiben, die an den jeweiligen Halteeinrichtungen angeordnet sind, und die mit einer Greif-Einrichtung gekoppelt sind, so dass die Kunststoffvorformlinge gedreht werden.

Daneben könnte auch ein Greifer auf einer Kurvenscheibe eingesetzt werden, um einen direkten Transport in dem Erwärmungsmodul zu erreichen. Durch eine intelligente Kinematik des Systems könnte auch so eine gleichmäßige oder alternativ ungleichmäßige Bewegung innerhalb der Applikatoreinrichtung durchgeführt werden.

Die Übergabe der Kunststoffvorformlinge in die Applikatoreinrichtung kann, wie oben erwähnt, von oben, der Seite her oder theoretisch auch von der Unterseite her erfolgen. Wie oben erwähnt, sollten diese offenen Seiten gegenüber einem Strahlungsaustritt gesichert sein. Bei einer weiteren vorteilhaften Ausführungsform weist die Vorrichtung eine WendeEinrichtung auf, welche dazu geeignet und bestimmt ist, eine Ausrichtung der Kunststoffvorformlinge zu wenden. So könnten beispielsweise die Kunststoffvorformlinge derart gewendet werden, dass sie mit ihrer Mündung nach unten durch die Applikatoreinrichtung transportiert werden. Dies hätte den Vorteil, dass eine Kühlung der Mündungsbereiche der Kunststoffvorformlinge leichter realisiert werden kann.

Die Transport-Einrichtungen aus der Applikatoreinrichtung bzw. Heiz-Einrichtung heraus und herein können analog zum Stand der Technik mit Teilungsverzugssternen, oder Sägezahnsternen ausgeführt werden, oder aber mittels Mover-Bändern oder anderen Transportsystemen in die nachfolgenden Bearbeitungsschritte übergeben werden bzw. aus einer vorherigen Bestückungsvorrichtung entnommen werden. Der Vorteil von Bändern oder Movern könnte der variablere Prozess sein. So könnte beispielsweise die Transport-Einrichtung ein entsprechendes Schienensystem mit einer Heizvorrichtung, mehreren Formmaschinen und dergleichen aufweisen mit Hilfe der eine Bewegungseinrichtung wie ein Mover und entsprechende Abzweigungen versorgt werden. Dies könnte beispielsweise auch mit Verzugssternen oder -bändern oder Lufttransporteuren oder dergleichen realisiert werden.

Wie oben erwähnt, ist auch eine gezielte Kühlung bestimmter Bereiche der Kunststoffvorformlinge während des Transports vorteilhaft. Während der Heizphase oder nach der Heizphase oder auch während einer Transferphase nach der Heizphase kann eine örtliche Abnahme der Temperatur durch beispielsweise eine Düseneinrichtung, wie beispielsweise eine Vortecdüse erreicht werden. Auch kann eine Oberflächenkühlung vorgenommen werden, in dem ein Bereich des Kunststoffvorformlings von einem Kühlelement kontaktiert wird. Auch kann es vorteilhaft sein, wenn während der Heizphase gleichzeitig gekühlt wird, um gewisse Bereiche der Kunststoffvorformlinge vor dem Überhitzen zu schützen oder aber um eine bestimmte Temperaturprofilierung zu erreichen. Auch könnte es möglich sein, durch die Kühlung den Kunststoffvorformling auf eine gewisse festlegbare Temperatur zu kühlen und die Kühlung als Regelkreislauf aufzubauen. Dabei kann eine Stellgröße, mit der etwa ein Lüfter oder dergleichen betrieben wird, auch eine Regelgröße sein, mittels der die Temperatur der Kunststoffvorformlinge eingestellt wird.

Bei einer weiteren vorteilhaften Ausführungsform weist die Vorrichtung eine Auswurf-Einrichtung zum Aussortieren von mangelhaften Kunststoffvorformlingen auf. Diese können mangelhaft sein beispielsweise wegen ihres Materials oder wegen der Geometrie oder auch wegen Behandlungsfehlern. Bei einem fehlerhaften Temperaturprofil oder eines anderen Defekts der Kunststoffvorformlinge sollte es die Möglichkeit geben, diesen Kunststoffvorformling insbesondere einzeln aus einem Formenrad oder einer anderen Behandlungsstation oder einer Transport-Einrichtung auszuschleusen. Dies kann über Stellglieder erfolgen, welche den Kunststoffvorformling aus dem Prozess drücken. Diese können beispielsweise mechanisch, elektrisch, pneumatisch, hydraulisch oder elektromechanisch betrieben werden. Dabei kann bevorzugt im Vorfeld eine Detektion eines Defekts oder eines fehlerhaften Transportprofils insbesondere berührungsfrei erfolgen.

Die vorliegende Erfindung ist weiterhin auf ein Verfahren zum Erwärmen von Kunststoffvorformlingen gerichtet, wobei die Kunststoffvorformlinge mit einer Transporteinrichtung entlang eines vorgegebenen Transportpfades transportiert werden. Dabei weist die Transporteinrichtung Halteeinrichtungen zum Halten der Kunststoffvorformlinge auf und dieser Transportpfad weist wenigstens einen Erwärmungsabschnitt auf, innerhalb dessen die Kunststoffvorformlinge erwärmt werden. Weiterhin ist wenigstens eine Erwärmungseinrichtung -insbesondere stationär- wenigstens abschnittsweise entlang des Transportpfades angeordnet und erwärmt die von der Transporteinrichtung transportierten Kunststoffvorformlinge während deren Transport durch den Erwärmungsabschnitt. Dabei weist die Erwärmungseinrichtung eine insbesondere stationäre Applikatoreinrichtung auf, welche die Kunststoffvorformlinge mit Mikrowellen zu deren Erwärmung beaufschlagt.

Erfindungsgemäß ist die Transporteinrichtung zumindest im Erwärmungsabschnitt derart gegenüber der Applikatoreinrichtung angeordnet, dass zumindest ein Abschnitt der Halteelemente außerhalb der Applikatoreinrichtung angeordnet ist. Es wird daher auch verfahrensseitig vorgeschlagen, dass wenigstens ein Bestandteil der Erwärmungseinrichtung nicht innerhalb bzw. durch die Applikatoreinrichtung verläuft.

Bei einem weiteren erfindungsgemäßen Verfahren werden ebenfalls Kunststoffvorformlinge mit einer Transporteinrichtung entlang eines vorgegebenen Transportpfades transportiert, wobei die Transporteinrichtung Halteelemente zum Halten der Kunststoffvorformlinge aufweist und wobei dieser Transportpfad wenigstens einen Erwärmungsabschnitt aufweist, innerhalb dessen die Kunststoffvorformlinge erwärmt werden. Dabei ist weiterhin eine Erwärmungseinrichtung vorgesehen, welche insbesondere stationär wenigstens abschnittsweise entlang des Transportpfades angeordnet ist und welche die von der Transporteinrichtung transportierten Kunststoffvorformlinge während deren Transport durch den Erwärmungsabschnitt erwärmt. Dabei weist die Erwärmungseinrichtung eine insbesondere stationäre Applikatoreinrichtung auf, welche die Kunststoffvorformlinge mit Mikrowellen zu deren Erwärmung beaufschlagt. Erfindungsgemäß werden wenigstens zeitweise die Kunststoffvorformlinge bezüglich ihrer Längsrichtung, insbesondere während der Erwärmung, gedreht. Vorteilhaft werden die Kunststoffvorformlinge wenigstens zeitweise sowohl transportiert als auch bezüglich ihrer Längsrichtung gedreht.

Insbesondere werden die Mikrowellen in die Applikatoreinrichtung eingekoppelt. Es wäre grundsätzlich denkbar, dass die Mikrowellen in der Applikatoreinrichtung erzeugt werden, hier wird jedoch vorgeschlagen, dass die Mikrowellen außerhalb der Applikatoreinrichtung erzeugt werden und in die Applikatoreinrichtung eingekoppelt werden. Dieses Einkoppeln der Mikrowellen erfolgt insbesondere über einen Hohlwellenleiter.

Wie oben erwähnt, kann der hier beschriebenen Erwärmungseinrichtung eine Vorrichtung zum Umformen von Kunststoffvorformlingen zu Kunststoffbehältnissen und insbesondere Kunststoffflaschen nachgeordnet sein.

Bei der Vorrichtung zum Umformen von Kunststoffvorformlingen zu Kunststoffbehältnissen handelt es sich bevorzugt um eine Blasmaschine. Dies bedeutet, dass die Kunststoffvorformlinge zunächst in einer Heizstrecke thermisch konditioniert und anschließend durch Beaufschlagung mit einem flüssigen oder gasförmigen Medium expandiert werden. Das fließfähige Medium steht bevorzugt unter Druck. Für die Zuführung des unter Druck stehenden Mediums weist die Vorrichtung eine Blasdüse auf, welche an eine Mündung der Kunststoffvorformlinge dichtend anlegbar ist, um die Kunststoffvorformlinge so mit flüssigem oder gasförmigem Medium zu expandieren. Daneben ist bevorzugt auch eine Ventilanordnung vorgesehen, welche die Zuführung der Blasluft an die Kunststoffvorformlinge steuert.

Bevorzugt handelt es sich bei der Blasmaschine um eine Streckblasmaschine, was bedeutet, dass die Vorformlinge vor und/oder während der Expansion mittels einer Reckstange in Längsrichtung gedehnt werden. Die Blasstationen weisen dabei jeweils Reckstangen auf, welche in die Kunststoffvorformlinge einführbar sind und die Kunststoffvorformlinge in ihrer Längsrichtung dehnen. Die Reckstangen weisen dabei bevorzugt einen elektrischen Antrieb auf.

Bei einer vorteilhaften Ausführungsform ist eine Vielzahl von Blasstationen an einem gemeinsamen beweglichen Träger angeordnet. Bei diesem Träger handelt es sich dabei insbesondere um einen drehbaren Träger. Die Blasstationen weisen jeweils eine Blasformeinrichtung auf, welche bevorzugt einen Hohlraum ausbilden, innerhalb dessen die Kunststoffvorformlinge zu den Kunststoffbehältnissen expandierbar sind. Diese Blasformeinrichtungen sind dabei bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar sind, um die Blasformeinrichtungen zu öffnen und zu schließen. Zudem weist der Blasformträger Verriegelungsmechanismen auf, um die Formhälften während des Blasvorgangs gegeneinander zu verriegeln.

Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen sind dabei bevorzugt außerhalb des Reinraums angeordnet.

Die Blasformeinrichtungen werden bevorzugt innerhalb des Reinraums transportiert. Der Reinraum wird bevorzugt von mehreren Wandungen begrenzt. Bevorzugt wird der Reinraum dabei von wenigstens einer stehenden Wandung und einer sich gegenüber dieser stehenden Wandung bewegenden Wandung begrenzt. Der Reinraum grenzt die Blasformen insbesondere von einer unsterilen Umgebung ab. Vorteilhaft ist der Reinraum ring- oder torusartig um die Blasstationen bzw. Umformungsstationen und/oder den Transportpfad der Kunststoffbehältnisse ausgebildet.

Weitere Vorteile und Ausführungsformen ergeben sich aus den beigefügten Zeichnungen.

Dabei zeigen:
- Fig. 1 a, b: Zwei Darstellungen einer erfindungsgemäßen Vorrichtung;
- Fig. 2 a, b: Zwei Darstellungen zur Veranschaulichung von Applikatorprinzipien;
- Fig. 3 a, b: Zwei Darstellungen einer Applikatoreinrichtung;
- Fig. 4 a - 4 c: Drei Darstellungen einer Applikatoreinrichtung;
- Fig. 5 a - 5 d: Vier Darstellungen einer Applikatoreinrichtung;
- Fig. 6 a - 6 c: Drei Darstellungen einer Abstimmeinrichtung;
- Fig. 7 a, 7 b, 7 c, 7 d, 7 e: Fünf Darstellungen von Feldverteilungen in der Applikatoreinrichtung;
- Fig. 8 a - 8 d: Vier Darstellungen von Dämpfungseinrichtungen;
- Fig. 9 a - 9 d: Vier Darstellungen für Layouts für Applikatoreinrichtungen;
- Fig. 10 a - 10 d: Vier Darstellungen zur Veranschaulichung einer Regelung der Applikatoreinrichtungen;
- Fig. 11 a - 11 f: Sechs Darstellungen von Halteeinrichtungen für Kunststoffvorformlinge;
- Fig. 12a - 12d: Vier Darstellungen zur Funktionsweise eines Funktionselements;
- Fig. 13a - 13d: Vier Darstellungen zur Veranschaulichung der Temperierung; und
- Fig. 14a - b: zwei Darstellungen einer erfindungsgemäßen Vorrichtung in einer weiteren Ausführungsform.

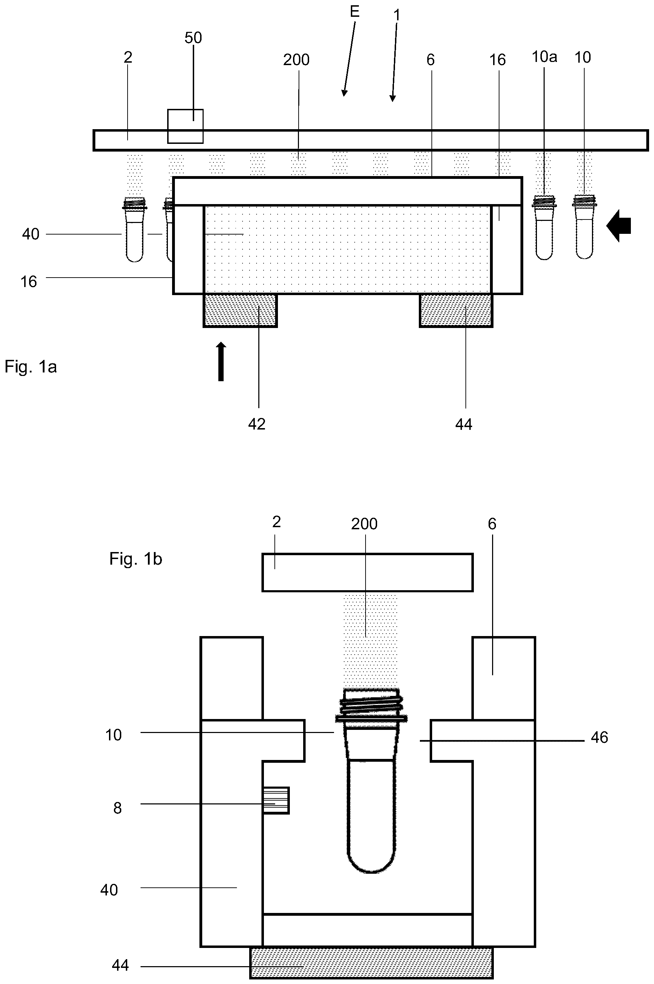

Figur 1 a zeigt einen schematischen Aufbau einer erfindungsgemäßen Vorrichtung 1 zum Erwärmen von Kunststoffvorformlingen 10. Diese Vorrichtung 1 weist eine Transporteinrichtung 2 auf, an der eine Vielzahl von Halteeinrichtungen 200 angeordnet ist. Diese Halteeinrichtungen können hier entlang des Pfeils bewegt werden. Die Transporteinrichtung kann dabei bevorzugt einen umlaufenden Träger aufweisen, an dem die einzelnen Halteelemente beweglich angeordnet sind. Die Halteeinrichtungen weisen jeweils unten genauer beschriebene Innengreifer auf, die jeweils in den Mündungen 10 a der Kunststoffvorformlinge 10 eingreifen.

Das Bezugszeichen 40 kennzeichnet schematisch eine Applikatoreinrichtung, durch welche die Kunststoffvorformlinge hindurchtransportiert werden und in welcher die Kunststoffvorformlinge mit Mikrowellen beaufschlagt werden. Zu diesem Zweck werden Mikrowellen erzeugt und, wie durch den kleinen vertikalen Pfeil gezeigt, in die Applikatoreinrichtung 40 eingekoppelt. Im Bereich eines Wellenleiterausgangs können unten genauer beschriebene Tuning-Elemente vorhanden sein. Das Bezugszeichen E kennzeichnet einen Erwärmungsbereich, innerhalb dessen die Kunststoffvorformlinge 10 erwärmt werden. Dieser Erwärmungsbereich erstreckt sich hier entlang der Applikatoreinrichtung in der Transportrichtung der Kunststoffvorformlinge.

Das Bezugszeichen 6 kennzeichnet eine erste Dämpfungseinrichtung, die dazu dient, aus dem Applikator austretende Mikrowellen zu dämpfen bzw. abzuschwächen.

Die Bezugszeichen 16 beziehen sich auf weitere Dämpfungseinrichtungen, die an den Stirnseiten der Applikatoreinrichtung vorgesehen sein können, das heißt an den Stellen, an denen die Kunststoffvorformlinge in die Applikatoreinrichtung eintreten und wieder austreten.

Eine erfindungsgemäße Vorrichtung 1 kann eine Vielzahl von in der Transportrichtung der Kunststoffvorformlinge hintereinander angeordneten Applikatoreinrichtungen aufweisen. Wie oben erwähnt, können die Applikatoreinrichtungen dabei sowohl einen geradlinigen Verlauf als auch einen gekrümmten Verlauf annehmen.

Das Bezugszeichen 50 kennzeichnet grob schematisch eine Dreheinrichtung, welche eine Drehung der einzelnen Halteeinrichtungen 200 und auch der daran angeordneten Kunststoffvorformlinge 10 bewirkt. Wie oben erwähnt, kann diese Dreheinrichtung etwa einen (nicht gezeigten) Zahnriemen aufweisen, an dem entsprechende Zahnräder der Halteeinrichtung ablaufen so dass eine Drehung der Halteeinrichtungen bewirkt wird

Figur 1 b zeigt eine Ansicht der Vorrichtung in Transportrichtung der Kunststoffvorformlinge. Auch hier ist wieder das Halteeinrichtung 200 gezeigt, an welcher der Kunststoffvorformling 10 angeordnet ist. Das Bezugszeichen 46 kennzeichnet einen Spalt, innerhalb dessen der Kunststoffvorformling durch die Applikatoreinrichtung 40 transportiert wird. Das Bezugszeichen 8 kennzeichnet ein unten genauer beschriebenes Funktionselement, welches die Feld-verteilung im Inneren der Applikatoreinrichtung anpasst. Das Bezugszeichen 44 kennzeichnet wieder die Abstimmeinrichtung, die zum Abstimmen der Wellenlängen dient, wie unten genauer beschrieben.

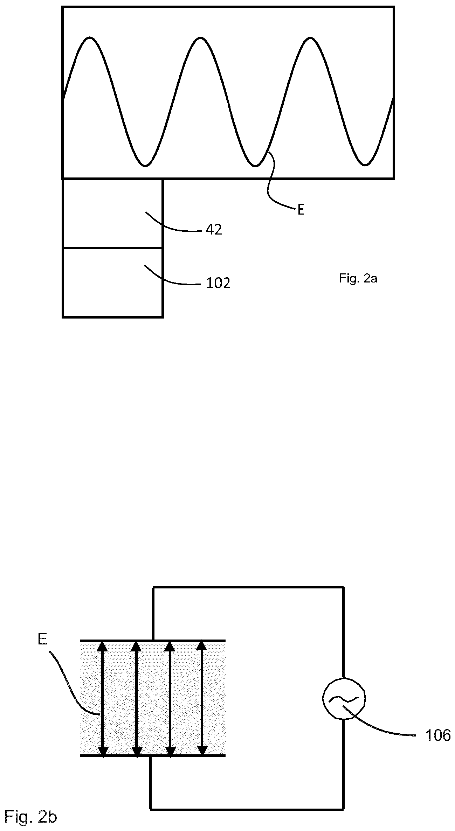

Die Figuren 2 a und 2 b zeigen zwei Grundprinzipien bei der Beaufschlagung von Kunststoffvorformlingen mit Mikrowellen. Bei der in Figur 2 a gezeigten Situation werden von einer Mikrowellenquelle 102 und hier einer Einkopplungseinrichtung 42 die Mikrowellen in die Applikatoreinrichtung eingekoppelt. Bei der in Figur 2 b gezeigten Situation werden die Mikrowellen in dem Applikator ausgehend von einer Wechselstromquelle 106 erzeugt. Im Rahmen der Erfindung wird insbesondere auf das in Figur 2 a gezeigte Prinzip zurückgegriffen, bei dem Mikrowellen in die Applikatoreinrichtung eingekoppelt werden.

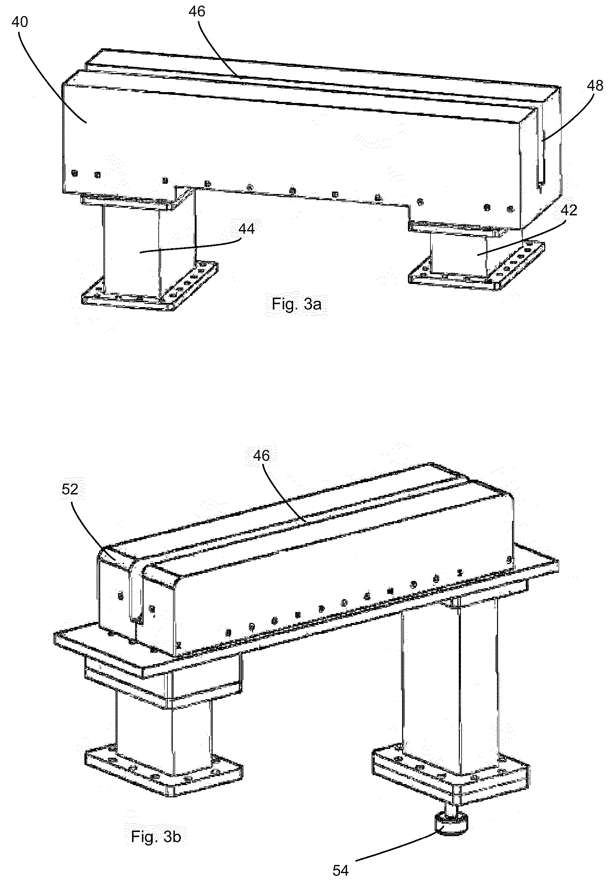

Die Figuren 3 a, 3 b zeigen zwei Ausgestaltungen einer Applikatoreinrichtung 40. Man erkennt hier wieder den Spalt 46, durch den die Kunststoffvorformlinge geführt werden. Das Bezugszeichen 48 kennzeichnet einen Eintrittsspalt, über den die Kunststoffvorformlinge in den Applikator und/oder Resonator eintreten. Das Bezugszeichen 42 kennzeichnet eine Zuführeinrichtung wie einen Hohlleiter, über den die Mikrowellen in die Applikatoreinrichtung 40 eingekoppelt werden. Das Bezugszeichen 44 kennzeichnet eine Ausführ- bzw. Auskoppeleinrichtung im Bereich derer die Mikrowellen aus den Applikationsbereich der Applikatoreinrichtung ausgekoppelt werden. In diesem Bereich können auch Abstimmeinrichtungen, wie beispielsweise unten genauer bezeichnete Tuning-Stifte oder Tuning-Platten vorgesehen sein.

Figur 3 b zeigt eine weitere Ausgestaltung der Applikatoreinrichtung 40. Dabei ist ein Design gezeigt, das keine scharfen Kanten aufweist, sodass das Risiko von Bogenbildungen reduziert wird.

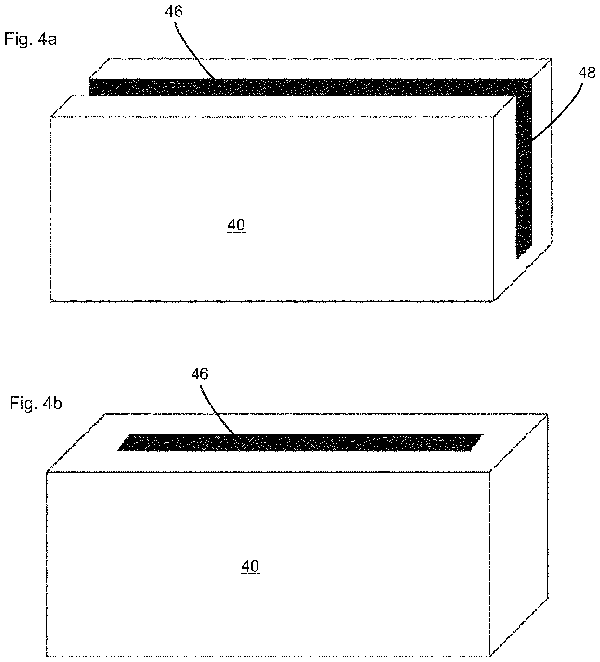

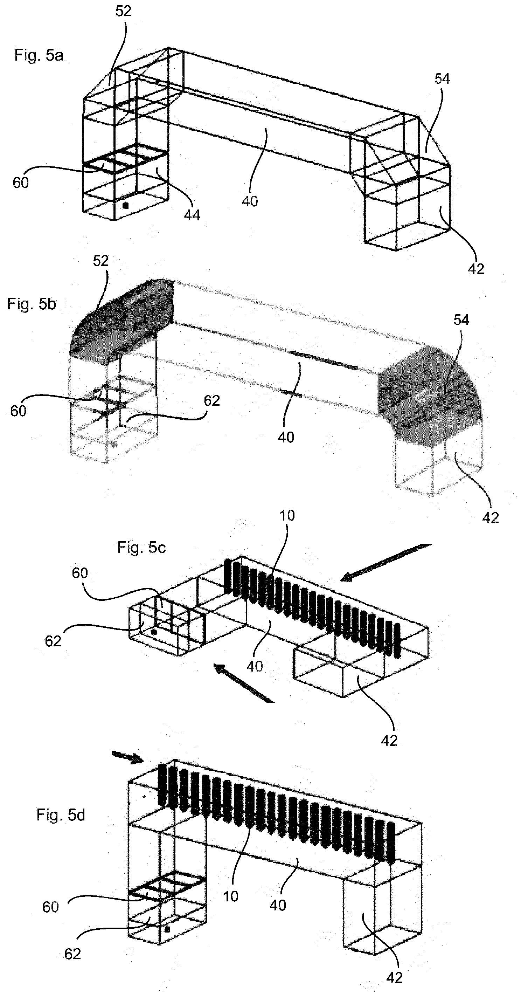

Die Figuren 4 a bis 4b zeigen zwei Ausgestaltungen von Applikatoreinrichtungen. Dabei ist es möglich, dass die Applikatoreinrichtung wie in Figur 4 a gezeigt auf drei Seiten offen ist. Dabei können die Kunststoffvorformlinge über einen Spalt 48 eingeführt und auf der anderen Seite wieder ausgeführt werden. Weiterhin kann die Applikatoreinrichtung auch ausgeführt sein, wie in Figur 4 b gezeigt, das heißt nur einen Spalt 46 aufweisend. In diesem Falle werden die Kunststoffvorformlinge in diesen Spalt eingetaucht, um innerhalb der Applikatoreinrichtung 40 erwähnt zu werden. Die Figuren 5 a bis 5 d zeigen vier Ausgestaltungen von Applikatoreinrichtungen. Dabei sind jeweils wieder die Zuführeinrichtungen 42 bzw. die Einkoppel-Hohlleiter 42 vorgesehen sowie die Auskoppel-Hohlleiter. Das Bezugszeichen 60 kennzeichnet grob schematisch eine Abstimmeinrichtung, die innerhalb des Ausgangshohleiters 44 angeordnet ist. Diese Abstimmeinrichtung kann hier in einer vertikalen Richtung bewegt werden, um eine Wellenlänge und/oder eine Intensität der Mikrowellen innerhalb der Applikatoreinrichtung 40 abzustimmen. Die Bezugszeichen 52 und 54 kennzeichnen zwei Umlenkungsbereiche, in denen die Mikrowellen in die Applikatoreinrichtung 40 umgelenkt werden. Man erkennt, dass hier eine Umlenkung um 90° erfolgt. Der Unterschied zwischen denen in den Figuren 5 a und 5 b gezeigten Varianten liegt darin, dass bei der in Figur 5 a gezeigten Variante ein polygonaler Übergang vorgesehen ist, wohingegen die Eckbereiche bei der in Figur 5 b gezeigten Ausführungsform gerundet sind.

In der Zuführeinrichtung 42 bzw. Einkoppeleinrichtung 42 kann eine nicht gezeigte Blende vorgesehen sein, um die Mikrowellen entsprechend gesteuert in die Applikatoreinrichtung 40 einzukoppeln.

Die Figuren 5 c und 5 d zeigen zwei unterschiedliche Vorgehensweisen bei der Einkoppelung von Mikrowellen in die Applikatoreinrichtung 40. Die Bezugszeichen 10 beziehen sich hier wiederum auf die transportierten Kunststoffvorformlinge. Bei der in Figur 5 d gezeigten Variante werden die Mikrowellen ausgehend von dem Boden der Applikatoreinrichtung 40 eingekoppelt. Dabei ist der Materialkanal auf der Oberseite der Applikatoreinrichtung angeordnet. Bei der in Figur 5 c gezeigten Variante werden die Mikrowellen von der linken oder rechten Seite in die Applikatoreinrichtung eingekoppelt. Bei beiden Varianten kann wiederum eine Tuning-Einrichtung 60 vorgesehen sein. Daneben kann ein Schutzfenster 62 vorgesehen sein.

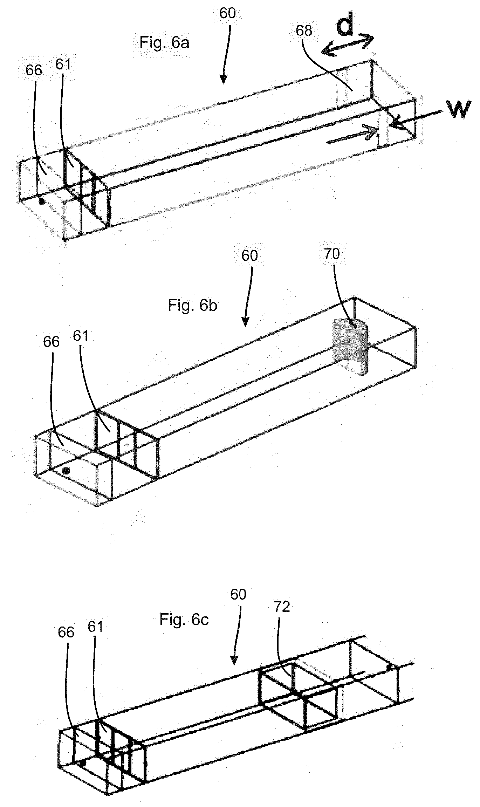

Die Figuren 6 a bis 6 c zeigen drei Beispiele für die Abstimmeinrichtung 60. Bei der in Figur 6 a gezeigten Variante ist innerhalb der Abstimmeinrichtung, das heißt innerhalb des Hohlleiters ein dielektrischer Block 68 vorgesehen. Dieser ist in der Richtung d bewegbar und weist eine Dicke w auf.

Bei der in Figur 6 b gezeigten Variante ist in einem Bereich des Abstimmelements 60 ein drehbares dielektrisches und/oder metallisches Material 70. Je nach Drehstellung dieses Materials können auch hier die Wellenverläufe innerhalb des Hohlleiters angepasst werden. Bei der in Figur 6 c gezeigten Variante ist ein Kurzschlusselement 72 innerhalb des Hohlleiters angeordnet. Auch dieses ist in seiner Bewegung verschiebbar und kann die effektive Länge des Hohlraumes bzw. auch des Resonators ändern.

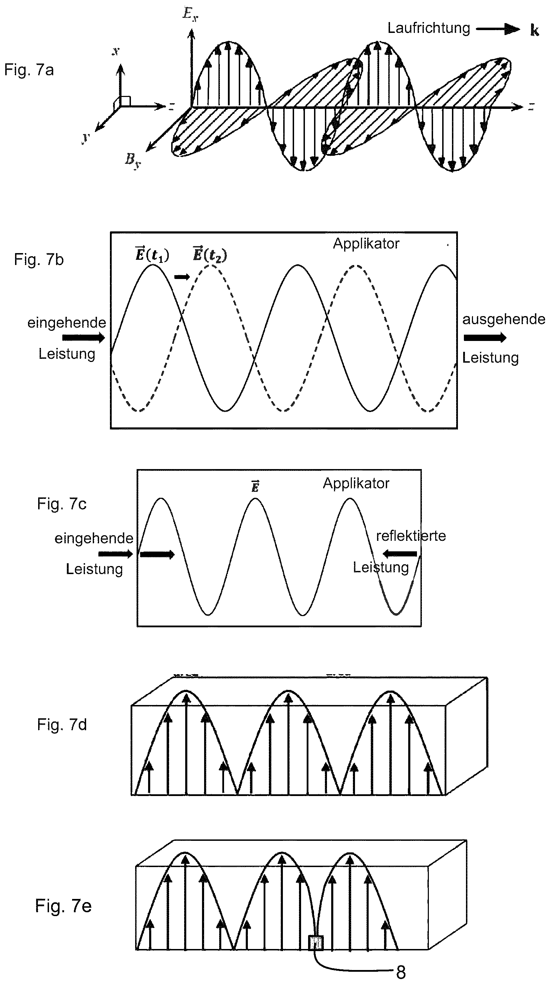

In den Figuren 7 a, 7 b, 7 c, 7 d und 7 e wird die Wellenerzeugung innerhalb des Applikators bzw. Resonators erklärt. Bei der in Figur 7 a gezeigten Situation ist eine wandernde Welle gezeigt. Falls keine Grenzbedingungen, beispielsweise durch Reflexion der Welle vorhanden sind, welche zu einem stehenden Wellenmuster führen, erlaubt der Hohlleiter der Welle, in eine bestimmte Richtung zu wandern. Hier ändert sich das Feld mit der Zeit und die Positionen der Maxima und Minima sind nicht festgelegt. Leistung wird in den Hohlleiter eingekoppelt und kann teilweise von Elementen innerhalb des Hohlleiters absorbiert werden, wobei die verbleibende Energie bevorzugt in eine am Ende liegende Last gespeist wird, wie etwa eine Wasserlast.

Wie in Figur 7 b gezeigt, treten bei dieser Ausgestaltung keine festen Positionen von Maxima und Minima auf. Diese Vorgehensweise bietet den Vorteil einer homogenen Erwärmung, weil die Maxima durch die Applikatoreinrichtung wandern. Ein Energietransfer ist hier in allen Positionen möglich. Leistung, die die Applikatoreinrichtung verlässt, kann abgeschwächt bzw. gedämpft werden. Ein Applikator in dieser Art kann auch leer bzw. ohne zu erwärmende Produkte betrieben werden.

Wie erwähnt, wird im Rahmen der Erfindung insbesondere Bezug genommen auf Mikrowellen, das heißt auf Mikrowellen, die in den Applikator eingekoppelt werden, jedoch außerhalb des Applikators erzeugt werden. Bei der in Figur 7 c gezeigten Ausführungsform bildet sich eine stehende Welle aus, das heißt es sind feste Positionen von Maxima und Minima vorhanden. Diese Vorgehensweise erlaubt eine bessere Steuerung über die Feldverteilung innerhalb der Applikatoreinrichtung. Mit einem Resonator können höhere Feldstärken und damit eine höhere Absorption der MW-Energie durch Substrate mit einem kleinen Absorptionskoeffizienten realisiert werden. Die Leistung wird innerhalb der Applikatoreinrichtung reflektiert. Diese Ausgestaltung verwendet bzw. benötigt jedoch eine Last wie beispielsweise die zu erwärmenden Kunststoffvorformlinge.

Es wäre bevorzugt auch möglich, Kombinationen aus den hier gezeigten Verfahren zu verwenden, das heißt eine Kombination aus einer Applikatoreinrichtung mit einer wandernden Welle (insbesondere für Vorheizen bis zu einer gewissen einheitlichen Temperatur) und ein Resonator, um eine Profilierung zu erreichen.

In den Figuren 7 d und 7 e wird beschrieben, wie die Heizlänge der Applikatoreinrichtung reduziert werden kann. Für einen resonanten TE10n-Applikator ist die Erwärmung der Kunststoffvorformlinge in denjenigen Bereichen, in dem Minima der stehenden Welle auftreten (Geringheitsbereich) zu niedrig. Um die Erwärmungseffizienz des Applikators zu verbessern, kann ein dielektrisches Material (vergleiche Figur 7 e) in die Applikatoreinrichtung eingebracht werden (wie beispielsweise Quarz, PTFA, und dergleichen). Dieses Material wird insbesondere in denjenigen Bereichen platziert, in denen eine geringe Erwärmung auftritt. Hierdurch wird die Beziehung zwischen den Hocherwärm-Bereichen und Niedrigerwärm-Bereichen verbessert und als direkte Folge wird die Gesamtlänge des Applikators verkürzt (vergleiche Figur 7 e).

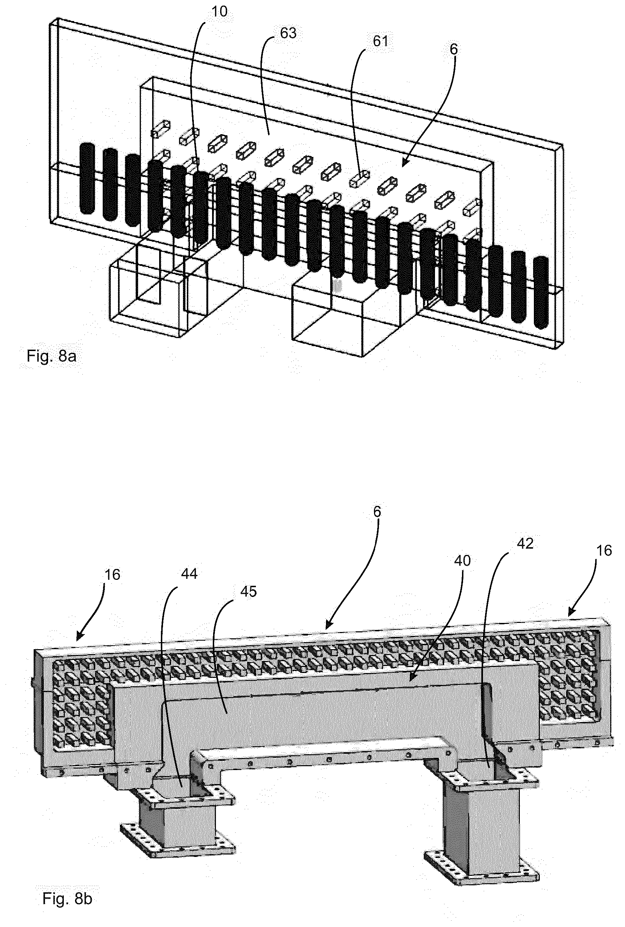

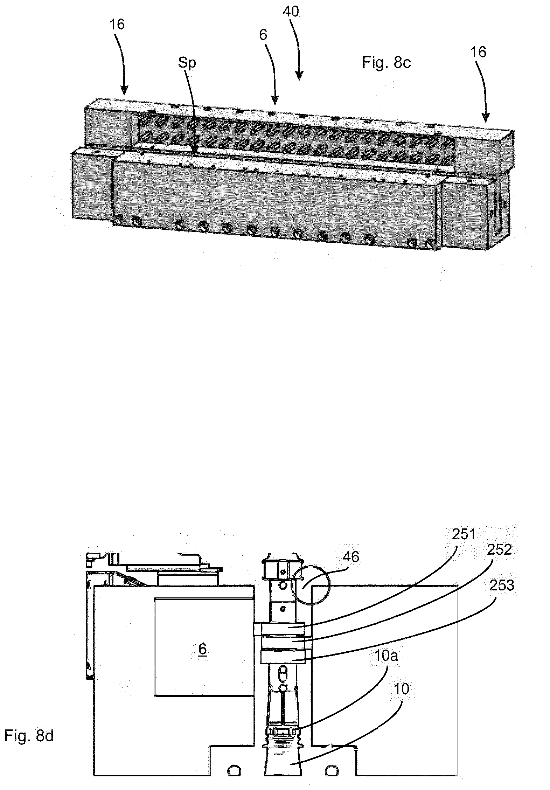

Die Figuren 8 a bis 8 d veranschaulichen die Dämpfung von Mikrowellen, welche aus der Applikatoreinrichtung und/oder dem Gehäuse der Maschine austreten können. Bei der in Figur 8 a gezeigten Darstellung sind die einzelnen Kunststoffvorformlinge 10 gezeigt. Weiterhin ist eine in seiner Gesamtheit mit 6 bezeichnete Dämpfungseinrichtung vorgesehen, welche dazu dient, um aus der Applikatoreinrichtung austretende Mikrowellen zu dämpfen. Dieses Dämpfungselement bzw. diese Dämpfungseinrichtung weist einen Träger 63 auf, an den eine Vielzahl von Vorsprüngen 61 angeordnet ist, welche sich hier in Richtung der Kunststoffvorformlinge erstrecken. Da die Kunststoffvorformlinge durch die Applikatoreinrichtung bewegt werden, und auch durch die Dämpfungseinrichtung 6, ist diese Dämpfereinrichtung 6 so optimiert, dass auch die Effekte auf die Halteelemente für die Kunststoffvorformlinge, die innerhalb dieses Elements bewegt werden, berücksichtigt werden. Geeignete Materialien, die einen geringen Verlust aufweisen, für diese Schutzstrukturen beispielsweise, wie oben erwähnt, AL₂O₃, PTFA, PTFE, Quarz, PEI, Igus A500 und dergleichen.

Grundsätzlich könnte das Material des Kanals 45, durch welchen die Kunststoffvorformlinge transportiert werden, mit einer Struktur beschichtet sein (zum Beispiel mit dünnen Platten), um das Volumen dieses Kanals und den übrigen Bereich der Applikatoreinrichtung durch eine Material mit geringem Verlust zu trennen. Der Sinn liegt darin, die Verunreinigung der Applikatoreinrichtung zu reduzieren und auch die Wartung und den Service der Applikatoreinrichtung zu erleichtern.

Die Beschichtung der Innenwandungen des Applikators ist eine Möglichkeit.

Eine weitere Möglichkeit ist der Aufbau einer Trennvorrichtung aus dielektrischem Material, um den eigentlichen Materialkanal (Bereich des Applikators, der von den Preforms durchlaufen wird) und dem restlichen Bereich des Applikators.

Bei einer bevorzugten Ausführungsform weist die Applikatoreinrichtung bzw. der Kanal 45 der Applikatoreinrichtung ein Luftspülsystem auf, um die Kontamination der Applikatoreinrichtung zu verringern. So könnten eine oder eine Vielzahl von Luftdüsen vorgesehen sein, welche insbesondere zeitweise den Innenraum der Applikatoreinrichtung mit Luft beispielsweise auch mit Sterilluft beaufschlagen.

Figur 8 b zeigt eine weitere Darstellung der erfindungsgemäßen Vorrichtung mit der Dämpfungseinrichtung 6 und weiteren seitlichen Dämpfungseinrichtungen 16. Dabei können die Dämpfungseinrichtungen 16 und Dämpfungseinrichtung 6 auf einem gemeinsamen Träger 61 bzw. 63 ausgebildet sein. Auch im Bereich der Dämpfungseinrichtung 16 ist eine Vielzahl der Vorsprünge 61 vorgesehen. Das Bezugszeichen 45 kennzeichnet den Kanal, durch den die Kunststoffvorformlinge, genauer, deren Grundkörper, gefördert werden. Auch hier ist wieder die Einkoppeleinrichtung 42 erkennbar sowie auch die Auskoppeleinrichtung 44, in der auch die (hier nicht gezeigten) Tuning-Elemente angeordnet sind.

Figur 8 c zeigt eine weitere Ausgestaltung einer Applikatoreinrichtung. In diesem Falle sind als Dämpfungseinrichtungen für die Randbereiche 16 Metallblöcke vorgesehen, welche zum Abschneiden von (nicht wandernden) Wellen dienen. Zwischen diesen metallischen Blöcken sind wieder die oben erwähnten Vorsprünge 61 vorgesehen.

Figur 8 d zeigt eine Ausgestaltung, bei der der Kunststoffvorformling 10 durch den nur teilweise dargestellten Raum der Applikatoreinrichtung gefördert wird. Auch hier ist wieder die Dämpfungseinrichtung 6 vorgesehen, welche insbesondere dafür sorgt, dass im Bereich des Spalts 46, innerhalb dessen die Halteeinrichtung 200 transportiert wird, die Mikrowellen gedämpft werden. Die Halteeinrichtung 200 weist hier drei Führungseinrichtungen 251, 252 und 253 auf, die zur seitlichen Führung der Halteeinrichtung 200 dienen. Im Bereich des Kreises ist ebenfalls eine Dämpfung von Mikrowellenstrahlung vorgesehen, sodass diese nicht aus dem Resonator bzw. der Applikatoreinrichtung austreten können oder zumindest hinreichend stark gedämpft werden. Wie oben erwähnt, kann es sich hierbei beispielsweise um Metallbürsten oder dergleichen handeln. Daneben kann auch zur Dämpfung eine λ/4-Falle verwendet werden.

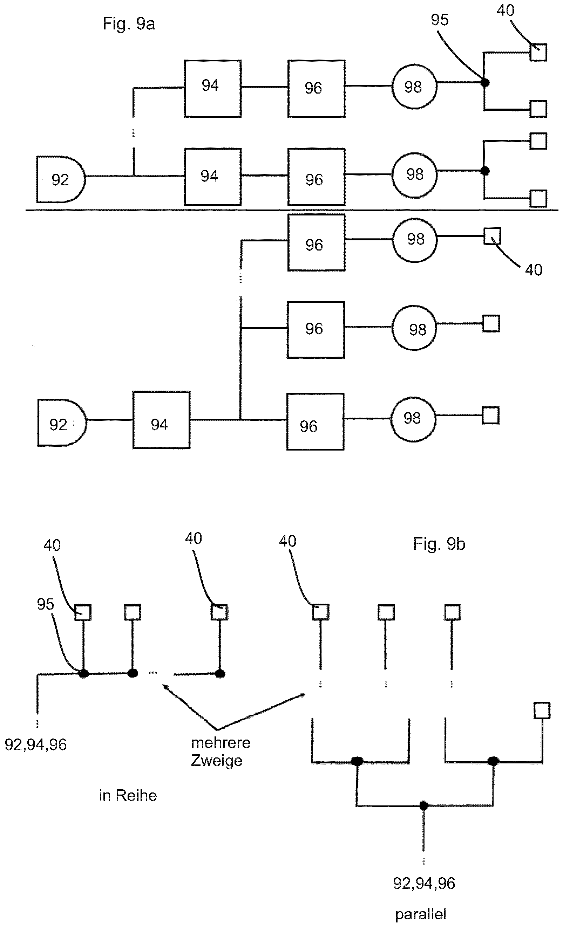

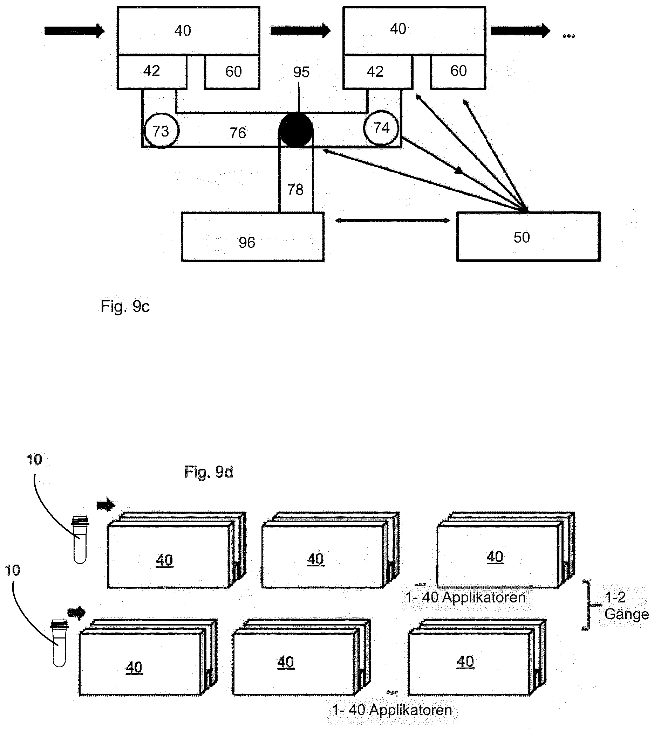

Die Figuren 9 a bis 9 d zeigen mehrere Darstellungen von unterschiedlichen Vorrichtungs-Layouts. Bei der in Figur 9 a im oberen Bild gezeigten Variante ist eine Leistungsquelle 92 vorhanden, welche über zwei oder mehrere Zweige mehrere Mikrowellengeneratoren 94 elektrisch versorgt. Diese Mikrowellengeneratoren 94 versorgen jeweils Mikrowellenquellen 96. An diese Mikrowellenquellen 96 schließen sich jeweils Zirkulatoren und Wasserlasten 98 an. Anschließend wird über einen Leistungssplitter 95 die Mikrowellenleistung jeweils auf zwei Applikatoreinrichtungen 40 aufgeteilt.

Bei der in Figur 9 a im unteren Bild gezeigten Variante ist ebenfalls eine Leistungsquelle 92, hier jedoch nur ein Mikrowellengenerator 94, vorgesehen. Dieser Mikrowellengenerator 94 versorgt wiederum hier drei oder auch mehrere Mikrowellenquellen 96. Jeder Mikrowellenquelle 96 ist eine Wasserlast bzw. ein Zirkulator 98 zugeordnet und jeweils hier eine Applikatoreinrichtung 40. Es wäre jedoch auch möglich, die Varianten aus Figur 9 a miteinander zu kombinieren.

Auch könnten andere Vorgehensweisen gewählt werden. Daneben wäre es auch möglich, dass ausgehend von einer Quelle über Leistungssplitter direkt mehrere Applikatoreinrichtungen versorgt werden, oder dass Leistungssplitter hintereinander angeordnet werden und zunächst ausgehend von einer Mikrowellenquelle ein Leistungssplitter auf zwei Zweige verteilt und in jedem dieser zwei Zweige über nachfolgende Leistungsteile wiederum auf zwei Zweige aufgeteilt wird. Eine derartige Vorgehensweise ist in Fig. 9b gezeigt.

Bei der in Figur 9 c gezeigten Ausgestaltung ist wiederum ein Mikrowellengenerator samt Mikrowellenquelle 96 vorgesehen, der über einen Hohlleiter 78 die Mikrowellen zu einem Leistungssplitter übermittelt. Ausgehend von diesem Leistungssplitter werden zwei Applikatoren 40 versorgt. Die Bezugszeichen 73 und 74 kennzeichnen Sensoreinrichtungen, welche beispielsweise eine eingehende Leistung messen, eine absorbierte Leistung, eine Impedanz oder dergleichen. Die Kunststoffvorformlinge werden entlang der Pfeile von einer Applikatoreinrichtung 40 zur nächsten transportiert. Die Bezugszeichen 50 kennzeichnet eine Steuerungseinrichtung, welche beispielsweise auch Signale von den Sensoreinrichtungen 73 und 74 empfangen kann, und welche umgekehrt den Leistungsteiler 95 ansteuern kann. Weiterhin kann die Steuerungseinrichtung 50 auch die einzelnen Applikatoreinrichtungen 40 ansteuern, genauer gesagt, die Einkopplungselemente 42 und die Abstimmreinrichtungen 60. Daneben kann die Steuerungseinrichtung 50 auch den Generator und die Mikrowellenquelle 96 ansteuern.

Dabei handelt es sich bevorzugt bei der Steuerungseinrichtung 50 um eine Regeleinrichtung, sodass eine Regelung des gesamten Systems ermöglicht wird.

Bei der in Figur 9 d gezeigten Situation können Kunststoffvorformlinge in zwei Gängen, das heißt auf parallelen Transportwegen durch mehrere hintereinander angeordnete Applikatoreinrichtungen 40 geführt werden. Auch wäre es möglich, dass mehr als zwei der Artikelgänge bzw. Transportzweige vorgesehen sind. Auf diese Weise kann der Durchsatz der Erwärmungseinrichtung insgesamt erhöht werden.

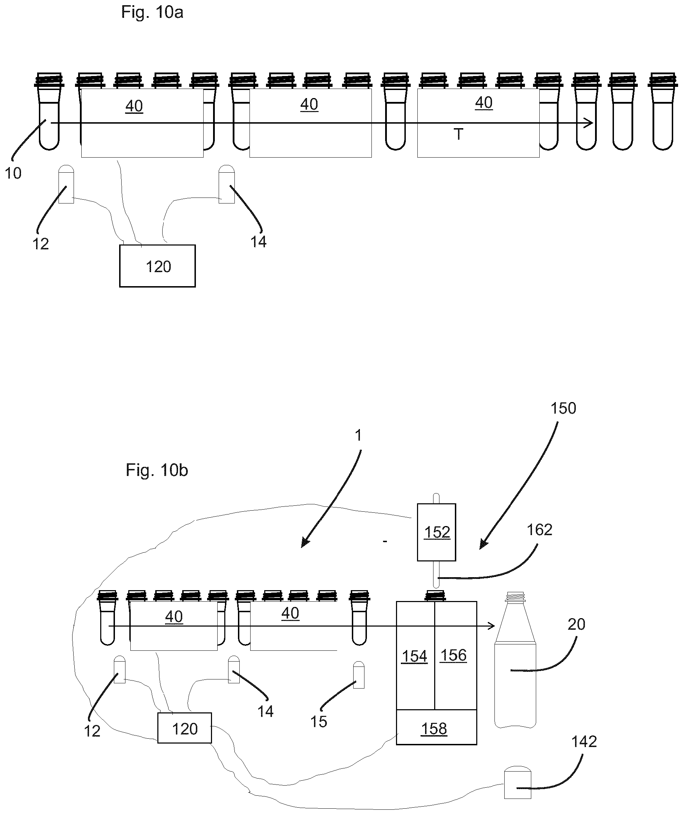

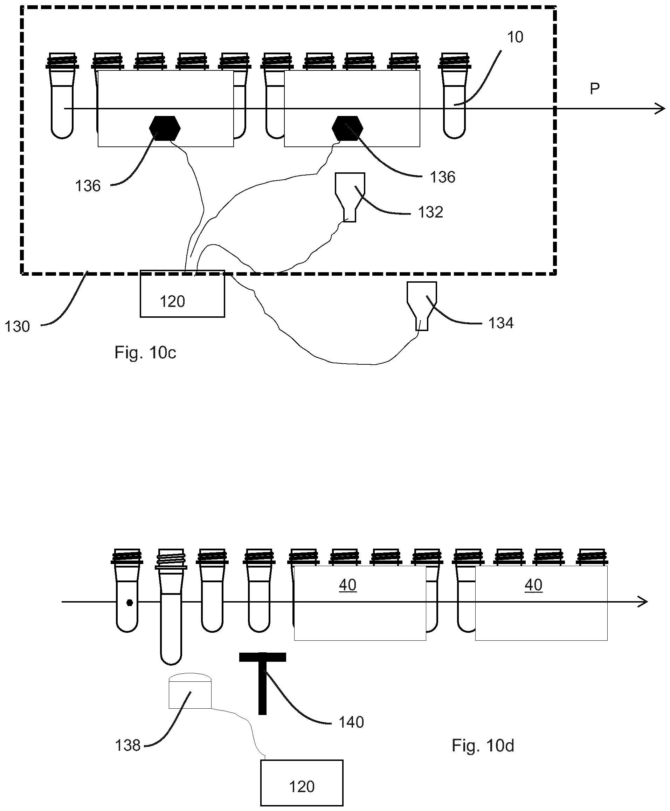

Die Figuren 10 a bis 10 d zeigen unterschiedliche Ausgestaltungen von erfindungsgemäßen Vorrichtungen mit zusätzlichen Messeinrichtungen. Figur 10 a zeigt eine Anordnung, bei der die Kunststoffvorformlinge 10 durch eine Vielzahl von hintereinander angeordneten Applikatoreinrichtungen 40 und entlang eines Transportpfades T transportiert werden. Das Bezugszeichen 12 kennzeichnet eine erste Sensoreinrichtung, wie insbesondere ein Pyrometer, welches berührungslos eine Temperatur der Kunststoffvorformlinge misst. Dabei misst diese erste Sensoreinrichtung 12 die Temperatur der Kunststoffvorformlinge vor dem Eintritt in die erste Applikatoreinrichtung 40. Die zweite Sensoreinrichtung 14 misst die Temperatur der Kunststoffvorformlinge nach deren Austritt aus der ersten Applikatoreinrichtung. Es wäre jedoch auch möglich, derartige Sensoreinrichtungen in die Applikatoreinrichtung selbst zu integrieren.

Das Bezugszeichen 120 kennzeichnet eine Steuerungseinrichtung, welche sowohl mit den beiden Sensoreinrichtungen 12 und 14 als auch mit der eigentlichen Applikatoreinrichtung 40 kommuniziert. Anstelle eines Pyrometers wäre es auch möglich, eine Infrarotkamera insbesondere am Einlauf vor der ersten Applikatoreinrichtung 40 zu verwenden. Weitere Sensoreinrichtungen könnten auch zwischen der zweiten und dritten Applikatoreinrichtung und am Ende der dritten Applikatoreinrichtung vorgesehen sein. Die linke erste Applikatoreinrichtung kann insbesondere dazu verwendet werden, um die Kunststoffvorformlinge auf ein einheitliches Temperaturniveau zu bringen.

Figur 10b zeigt eine weitere Ausgestaltung der erfindungsgemäßen Vorrichtung. Bei dieser Ausgestaltung ist der eigentlichen Erwärmungseinrichtung 1 eine Umformungseinrichtung, wie insbesondere eine Blasformmaschine 150 nachgeschaltet. Diese Blasformmaschine weist dabei eine Blasform mit einem ersten Seitenteil 154, einem zweiten Seitenteil 156 und Bodenteil 158 auf. Diese drei Teile bilden gemeinsam einen Hohlraum aus, innerhalb dessen der Kunststoffvorformling durch Beaufschlagung von einem Medium, insbesondere mit Druckluft zu einem fertigen Behältnis 20 expandiert wird. Anstelle von Druckluft könnte der Kunststoffvorformling auch mit einer später abzufüllenden Flüssigkeit expandiert werden.

Weiterhin sind diese Seitenteile 154 und 156 an (nicht gezeigten) Seitenteilträgern angeordnet. Auch das Bodenteil 158 kann an einem (nicht gezeigten) Träger angeordnet sein. Zum Öffnen und Schließen der Blasformen werden bevorzugt die Seitenteile auseinander geschwenkt und das Bodenteil 158 weggestellt.

Das Bezugszeichen 162 bezieht sich auf eine Reckstange. Das Bezugszeichen 152 kennzeichnet einen Ventilblock, der die Beaufschlagung der Kunststoffvorformlinge mit Blasluft steuert.

Auch bei der in Figur 10 b gezeigten Variante sind mehrere Sensoreinrichtungen 12, 14 und 15 dargestellt. Das Bezugszeichen 120 kennzeichnet wieder eine Steuerungseinrichtung, wobei hier jedoch auch die Umformungseinheit 150 und beispielsweise auch der Ventilblock 152 in Steuerung integriert sind.

Das Bezugszeichen 142 kennzeichnet eine weitere Inspektionsreinrichtung, welche die fertig geblasenen Behältnisse prüft. Dabei kann insbesondere auch die Ausformung eines Bodens beobachtet werden, oder auch andere Eigenschaften wie insbesondere eine Wandstärkenverteilung des fertigen Behältnisses. Dazu kann die Inspektions- bzw. Sensoreinrichtung 142 eine Vielzahl von Sensorelementen aufweisen, welche die Wandstärken des Behältnisses entlang deren Längsrichtung beobachten. Die Steuerungseinrichtung 120 ermöglicht bevorzugt auch eine IPC (Interprozesskommunikation). Auf diese Weise kann der gesamte Herstellungsprozess für die Behältnisse 20 selbst reguliert werden.

Bevorzugt erlauben die einzelnen Einrichtungen auch eine unterschiedliche Temperierung der Kunststoffvorformlinge entlang unterschiedlicher Bereiche in der Längsrichtung der Kunststoffvorformlinge. Dabei können insbesondere auch eine Endtemperatur vor dem Streckblasen, das heißt eine Temperatur, durch die durch die Sensoreinrichtung 15 gemessen wird als wichtige Regelgröße genutzt werden, da hier der Heizprozess betrachtet wird und nur dessen Auswirkungen auf die finale Behältnisqualität.

Figur 10 c zeigt eine Darstellung der Vorrichtung mit mehreren Messeinrichtungen. Bei dieser Ausgestaltung geht es insbesondere darum, das Auftreten von Fehlern und Austreten von Mikrowellen zu detektieren. Zu diesem Zweck weist die Vorrichtung zwei Sensoreinrichtungen 136 auf, die jeweils einer Applikatoreinrichtung 40 zugeordnet sind. Diese Sensoreinrichtungen sollen insbesondere Plasmazündungen erfassen. Bei diesen Sensoreinrichtungen 136 kann es sich beispielsweise um eine Fotodiode handeln, welche in den Resonator bzw. innerhalb in den Kanal der Applikatoreinrichtung blickt. Diese bzw. die Steuerungseinrichtung kann bei einer Plasmazündung sofort die Mikrowellenenergiezufuhr abschalten.

Die Bezugszeichen 132 und 134 beziehen sich auf erste und zweite Sensoreinrichtungen, welche dazu dienen, festzustellen, ob Mikrowellen aus den Applikatoreinrichtungen austreten. Dabei ist es möglich, dass die erste Sensoreinrichtung 132 innerhalb eines Gehäuses 130 angeordnet ist und feststellt, ob aus den Applikatoreinrichtungen 40 Mikrowellen austreten. Eine zweite Sensoreinrichtung 134 kann außerhalb des Gehäuses 130 angeordnet sein, um wiederum festzustellen, ob auch noch aus dem Gehäuse Mikrowellen austreten. Sollte eine der beiden Sensoreinrichtungen 132 und 134 einen zu hohen Messwert für die Mikrowellenenergie zeigen, so kann die Steuerungseinrichtung 120 die jeweiligen Applikatoreinrichtungen abschalten.

Bei der in Figur 10 d gezeigten Variante ist eine weitere Sensor- oder Messeinrichtung 138 vor der eigentlichen Applikatoreinrichtung 40 vorgesehen. Diese Messeinrichtung ist dazu geeignet und dazu bestimmt, geometrische Eigenschaften der Kunststoffvorformlinge zu bestimmen. Hier beispielsweise eine Preform-Länge. Bei Auftreten eines zu langen Kunststoffvorformlings kann dieser mit einer Auswurfeinrichtung 140 aus dem Produktionsstrom ausgeschleust werden. Entsprechend ist auch hier wieder die Steuerungseinrichtung 120 vorgesehen, welche auch hier die Auswurfeinrichtung 140 steuern kann.

Bei einem bevorzugten Mikrowellensystem ist zusätzliche eine Wasserkühlung, beispielsweise am Magnetron, an einem Zirkulator und einer Wasserlast vorgesehen. Aber auch die Applikatoreinrichtung selbst kann wassergekühlt sein. Bei modernen Halbleiterquellen sollte vor allem der Verstärker gekühlt werden. Auch dies erfolgt üblicherweise mit Wasser. Derartigen Gestaltungen weisen besonders bevorzugt einen Durchflussmesser und/oder Tempermessung auf, der die Temperatur des Kühlwassers erfasst. Auf diese Weise kann auch die korrekte Kühlmittelmenge kontrolliert werden.

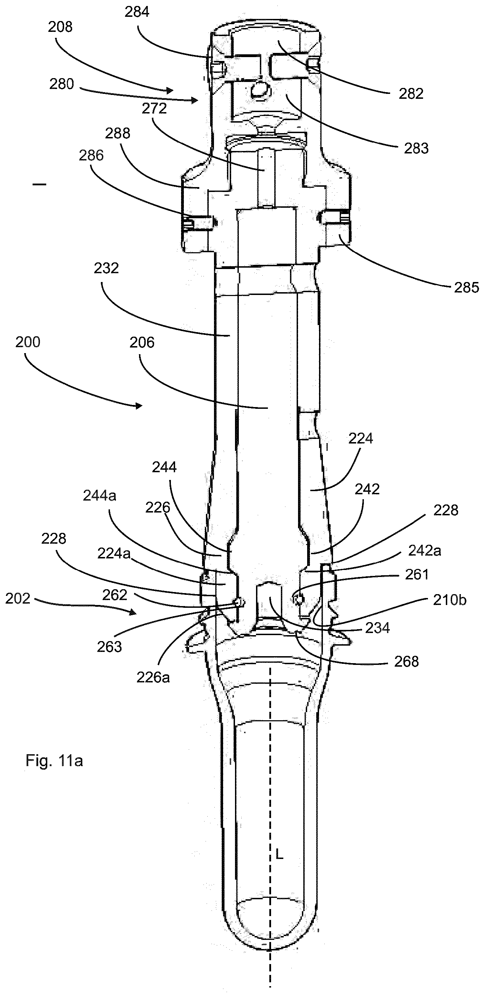

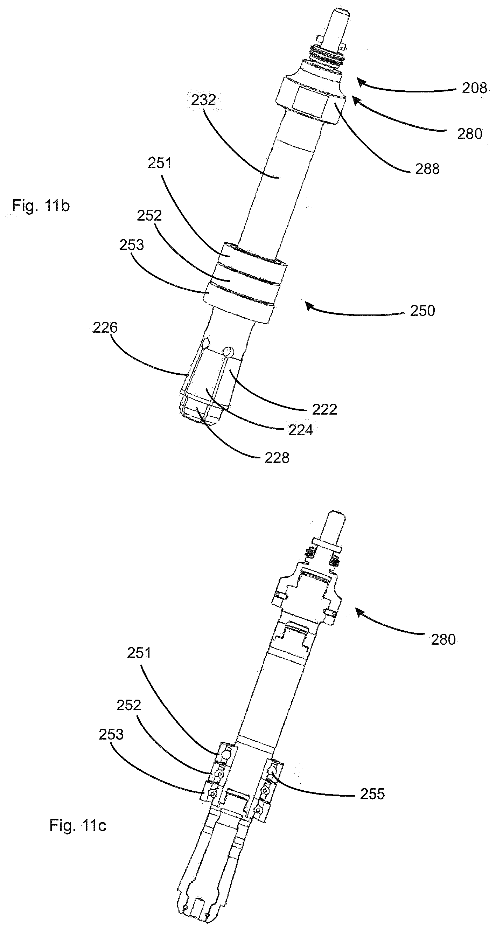

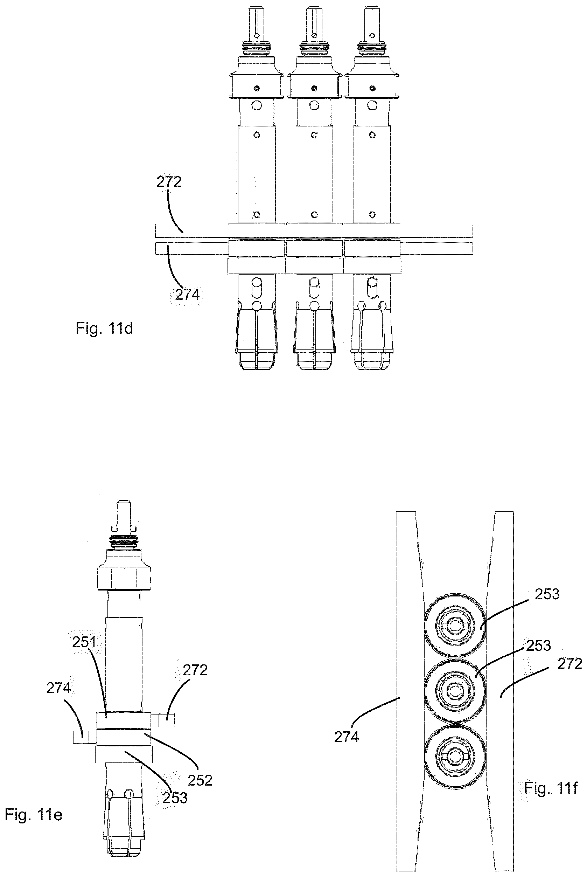

Figur 11 a zeigt eine Halteeinrichtung 200 für den Kunststoffvorformling 10 a nach dem Stand der Technik der Anmelderin. Dieses Halteelement 200 weist dabei eine relativ geringe Länge auf. Es wird jedoch darauf hingewiesen, dass einzelne Bestandteile, wie insbesondere die eigentliche Greifeinrichtung 202 auch für die erfindungsgemäße Halteeinrichtung verwendet wird, sodass insoweit auf diese Merkmale zurückgegriffen werden kann.

Figur 11a zeigt auch eine perspektivische Darstellung einer erfindungsgemäßen Halteeinrichtung 1. Diese Halteeinrichtung 200 weist dabei einen Halteabschnitt 202 auf, der zumindest teilweise in ein Behältnis bzw. in die Mündung eines Behältnisses einführbar ist.

Zu diesem Zwecke weist der Halteabschnitt fünf Haltelemente 224, 226 (die übrigen nicht dargestellt, da hinterseitig) auf, die jeweils einen radial nach innen versetzten Endabschnitt 224a, 226a aufweisen, der in die Mündungen der Kunststoffvorformlinge einführbar ist. Zwischen den einzelnen Haltelementen sind dabei jeweils Schlitze 225 angeordnet, durch die eine gewisse Relativbewegung der Halteeinrichtungen bezüglich einander möglich wird. Auf diese Weise können die Halteelemente 222, 224 beim Eintritt in den Kunststoffvorformling geringfügig näher aufeinander zugestellt werden. Diese Schlitze verlaufen dabei bevorzugt geradlinig und sind besonders bevorzugt parallel zu der Längsrichtung L der Halteeinrichtung. Die eingangs erwähnte Umfangsrichtung der Halteeinrichtung ist damit als Umfangsrichtung um die Längsrichtung definiert.

Das Bezugszeichen 268 kennzeichnet einen Anschlag des Spreizkörpers, der zwischen den einzelnen Halteelementen bzw. innerhalb derselben verläuft. Das Bezugszeichen 232 kennzeichnet einen Basiskörper des Halteabschnittes, an dem die Halteelemente 224, 226 angeordnet sind und mit dem die Halteelemente 224, 226 einteilig ausgebildet sind.

Bevorzugt sind diese Halteelemente zumindest geringfügig biegbar an dem Basiskörper 232 angeordnet. Durch diese biegbare Anordnung werden die Halteelemente bei Eintauchen in ein Kunststoffbehältnis leicht nach innen gedrückt und bringen nunmehr eine gewisse Gegenkraft gegen die Innenwandung der Mündung auf, welche die Kunststoffbehältnisse 10 an der Halteeinrichtung 200 hält.

Das Bezugszeichen 208 kennzeichnet einen Grundkörper bzw. Träger der Halteeinrichtung 200, an dem wiederum der Halteabschnitt 202, genauer gesagt der Basiskörper 232 angeordnet ist. Der Basiskörper 232 bildet im Inneren einen Hohlraum aus, in dem wiederum der Spreizkörper angeordnet ist. Über Schraubverbindungen 286 ist der Basiskörper 202 in dem Grundkörper 208 angeordnet. Das Bezugszeichen 285 bezieht sich dabei auf einen Aufnahmebereich, in den der Halteabschnitt, genauer der Basiskörper 232 eingeführt wird.

Bevorzugt wird zumindest der Abschnitt 232 und die Halteelemente 224, 226 aus einem nicht-metallischen Material gefertigt. Vorteilhaft ist auch der im Inneren (nicht sichtbar) befindliche Spreizkörper aus einem nicht-metallischen Material gefertigt.

Weiterhin ist in Fig. 11a die Halteeinrichtung 200 mit einem daran angeordneten Kunststoffvorformling 10 gezeigt. Dieser Kunststoffvorformling 10 weist eine Mündung auf, in welche der Endabschnitt der Halteeinrichtung eintaucht, um diesen Kunststoffvorformling zu halten.

Figur 11a zeigt weiterhin auch eine Schnittdarstellung der erfindungsgemäßen Halteeinrichtung 1. Dabei sind wiederum zwei Halteelemente 224 und 226 erkennbar. Man erkennt, dass innerhalb der Halteelemente der Spreizkörper 206 angeordnet ist, wobei sich das Bezugszeichen 262 auf das Spreizelement bezieht, welches definiert, wie weit bei eingesetzten Spreizkörpern die beiden Halteelemente 226 und 224, insgesamt jedoch sämtliche Halteelemente auseinandergedrückt und gegen die Innenwandung 210b des Kunststoffvorformlings gedrückt werden. Das Bezugszeichen 263 kennzeichnet eine Aufnahmenut des Halteelements 226, an der das Spreizelement 262 anliegt.

In diesem Zusammenhang wird darauf hingewiesen, dass der Spreizkörper die Halteelemente 224, 226 im Betriebszustand nicht weit aufspreizen muss. Entsprechend könnte der Spreizkörper auch als Stützkörper bezeichnet werden, der die Halteelemente radial nach innen abstützt. Allerdings werden die Halteelemente bei der Entnahme des Spreizkörpers aus dem Basiskörper ebenfalls zumindest leicht aufgespreizt.

Das Bezugszeichen 268 kennzeichnet wieder den unteren Anschlag, der an den Haltelementen 224, 226 anliegt.

Das Bezugszeichen 286 bezieht sich wieder auf Schraubeinrichtungen, wie hier Madenschrauben, mit denen der Träger 208 an dem Basiskörper 232 und damit auch dem Halteabschnitt 202 befestigt ist. Das Bezugszeichen 272 kennzeichnet eine kanalförmige Öffnung, durch welche ein Werkzeug wie beispielsweise ein kleiner Schraubenzieher eingeführt werden kann um einen Spreizkörper 206 in der Längsrichtung L nach unten aus dem Körper 232 herauszudrücken. Auf diese Weise wird das Spreizelement 262 zugänglich und kann eingewechselt werden.

Mit den Schraubkörpern 284 kann die gesamte Einrichtung an einem weiteren Element befestigt werden, wie beispielsweise einen stangenartigen Körper, der in die Ausnehmung 283 eintritt. Der Obere Bereich der Halteeinrichtung, insbesondere im Bereich der Ausnehmung und der Schraubkörper dient insgesamt als Befestigungsabschnitt 280, um die Halteeinrichtung an einem Träger, wie etwa einer Kette oder auch an Shuttles montieren zu können. Das Bezugszeichen 288 kennzeichnet eine Anlagefläche, um die Halteeinrichtung 200 an einem Träger zu montieren.

So kann beispielsweise die Halteeinrichtung an einem Antrieb befestigt werden, der auch bewirkt, dass der Kunststoffvorformling 10 um seine eigene Längsachse gedreht wird. Die Halteeinrichtung kann jedoch auch an einer Transporteinrichtung wie etwa einer Transportkette angeordnet sein und durch diese transportiert werden.

Das Bezugszeichen 244 bezieht sich auf einen hier umlaufenden Vorsprung, der an dem Spreizkörper 206 ausgebildet ist. Dieser Vorsprung greift in einem montierten Zustand in Nuten bzw. Ausnehmungen 242 ein, die in den einzelnen Halteelementen ausgebildet sind. Man erkennt dabei, dass die geometrischen Gestalten dieser Vorsprünge und Ausnehmungen aneinander angepasst sind. Nach unten hin,. d.h. in Richtung des Vorsprungs weisen sowohl die Nut als auch der Vorsprung jeweils Schrägflächen 242a, 244a auf. Durch diese Schrägflächen wird, wenn der Spreizkörper aus dem Basiskörper 232 bzw. den Halteelementen herausgedrückt werden soll, auf die Halteelemente eine Kraft ausgeübt, welche diese auseinanderspreizt.

Man erkennt weiterhin, dass sich das Spreizelement 262 relativ nahe an dem unteren Ende der Halteeinrichtung befindet, so dass es bei angeordnetem Kunststoffvorformling ebenfalls innerhalb dieses Kunststoffvorformlings angeordnet ist. Bevorzugt ist dieses Spreizelement in der Längsrichtung unterhalb des Vorsprungs 244 angeordnet und bevorzugt zwischen dem Vorsprung und dem Anschlagelement 268. Dies ist vorteilhaft, da in diesem Falle die durch das Spreizelement auf die Halteelemente aufzubringende Kraft geringer ist, als bei höherer Anordnung des Spreizelements 262.

Auch wird auf diese Weise ein Wechsel des Spreizelements 262 erleichtert, da der Spreizkörper 206 nicht so weit aus dem von den Halteelementen umgebenen Bereich herausgeschoben werden muss. Das Bezugszeichen 282 kennzeichnet eine in dem Grundkörper angeordnete Öffnung, durch welche ein Werkzeug zum Herausdrücken des Spreizkörpers 206 aus dem Basiskörper 232 eingeführt werden kann. Das Bezugszeichen 261 kennzeichnet eine an dem Spreizkörper angeordnete umlaufende Nut, in welche das Spreizelement 262 eingelegt werden kann. Auch das Spreizelement könnte entsprechend seiner Funktion als Stützelement bezeichnet werden, welches zum Abstützen der Halteelemente gegenüber dem Spreizkörper dient, insbesondere wenn die Halteeinrichtung in einen Kunststoffvorformling eingeschoben wird.

Fig. 11b zeigt eine Darstellung einer erfindungsgemäßen Halteeinrichtung. Diese Halteeinrichtung weist hier drei Führungseinrichtungen 251, 252 und 253 auf, die zur seitlichen Führung der Halteeinrichtung dienen. Diese drei Führungseinrichtungen sind gemeinsam Bestandteile einer mit 250 bezeichneten Führungsvorrichtung, die zum seitlichen Führen der Halteeinrichtung 200 dient. Die Führungseinrichtungen sind hier als drehbare Körper bzw. Außenringe ausgebildet, die gegenüber weiteren Führungsmitteln abrollen können.

Fig. 11c zeigt, dass die Führungseinrichtungen jeweils Kugellager mit Kugeln 255 aufweisen, um so die Drehung der Außenringe dieser Führungseinrichtungen zu erreichen. Man erkennt weiterhin, dass die unterste Führungseinrichtung 253 einen geringfügig größeren Außenquerschnitt aufweist als die beiden anderen Führungseinrichtungen 251 und 252. Diese Führungseinrichtung 253 dient zum Abrollen gegenüber benachbarten Führungseinrichtungen benachbarter Halteeinrichtungen.

Fig. 11d veranschaulicht das Konzept der Führung. Man erkennt dabei, dass die Führungseinrichtung 251 gegenüber einer ersten Schiene 272 abrollt, welche in dieser Figur vor den Führungseinrichtungen angeordnet ist. Die Führungseinrichtung 252 rollt gegenüber einer zweiten Schiene 274 ab, die hier hinter den Führungseinrichtungen angeordnet ist und die Führungseinrichtung 253 gegenüber der benachbarten Führungseinrichtung.

Die Figuren 11e und 11f zeigen zwei weitere Darstellungen, welche die Führung der Halteeinrichtungen veranschaulichen. Durch das hier vorgeschlagene Konzept werden die Halteeinrichtungen in drei Richtungen geführt und insgesamt so sowohl in der Transportrichtung als auch senkrecht hierzu.

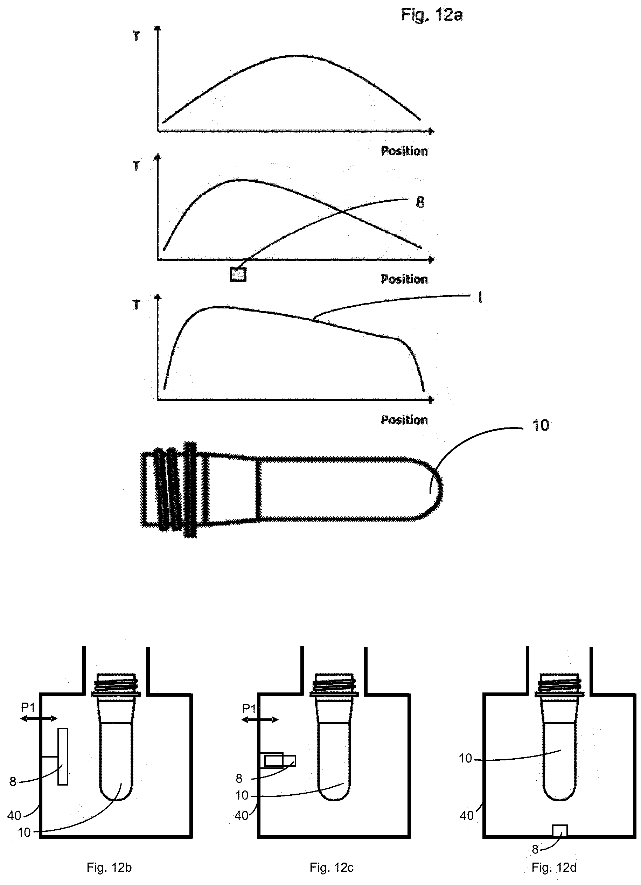

Die Figuren 12a - 12d veranschaulichen die Funktionsweise der oben erwähnten Funktionselemente. Dabei zeigt das obere Teilbild eine mögliche Feldverteilung innerhalb des Applikators entlang der Längsrichtung des im unteren Teilbild gezeigten Kunststoffvorformlings. Diese Feldverteilung bzw. dieses Feldprofil führt noch nicht zu der gewünschten Erwärmung des Kunststoffvorformlings.

Bei der im mittleren Teilbild von Fig. 12a gezeigten Situation ist ein Funktionselement 8, etwa ein dielektrisches Element in den Applikator eingebracht. Man erkennt, dass dieses Funktionselement die Feldverteilung innerhalb des Applikators ändert und insbesondere das Maximum des Feldes verschiebt.

Das untere Teilbild von Fig. 12a zeigt ein gewünschtes Profil der Feldverteilung. Man erkennt, dass das im mittleren Teilbild gezeigte Profil bereits näher an der gewünschten Feldverteilung liegt als das im oberen Teilbild gezeigte Profil.

Fig. 12b zeigt eine erste mögliche Ausgestaltung eines innerhalb des Applikators angeordneten Funktionselements 8. Dieses Funktionselement 8 ist hier seitlich in Richtung des Doppelpfeils P1 auf den Kunststoffvorformling zustellbar.

Fig. 12 c zeigt eine weitere Ausgestaltung eines Funktionselements 8. Dies kann dabei als kolben- oder stangenartiges Element ausgebildet sein, welches ebenfalls auf den Kunststoffvorformling zustellbar ist.

Fig. 12 d zeigt eine weitere Ausgestaltung eines Funktionselements. Dieses ist hier als dielektrischer Block ausgeführt, der an einem Boden der Applikatoreinrichtung, d.h. unterhalb des Transportpfads der Kunststoffvorformlinge angeordnet ist.

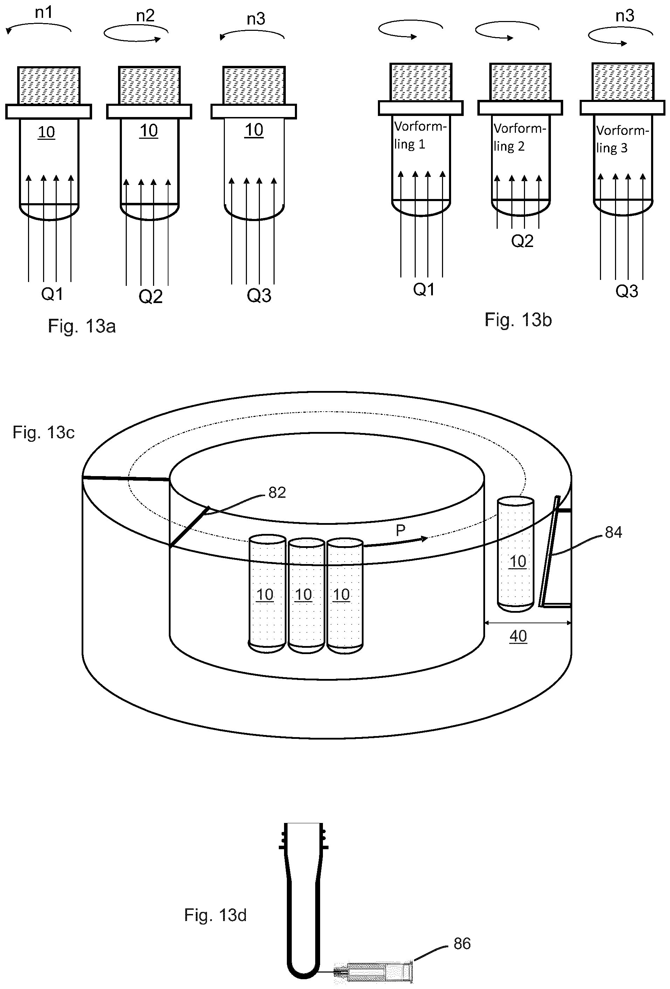

Die Figuren 13 a bis 13 d veranschaulichen unterschiedliche Temperierkonzepte für eine erfindungsgemäße Erwärmungseinrichtung. Diese Vorgehensweisen dienen insbesondere auch dazu, um ein in Umfangsrichtung sich änderndes Temperaturprofil auf den Kunststoffvorformling aufzubringen. Bei der in Fig. 13 a gezeigten Vorgehensweise wird die Drehzahl n1, n2, n3 des Kunststoffvorformlings variiert und somit in Rotationsrichtung ein inhomogenes Temperaturprofil aufgebracht.

Bei der in Fig. 13b vorgeschlagenen Vorgehensweise wird innerhalb einer ganzen Umdrehung des Kunststoffvorformlings im Heizmodul bzw. in dem Applikator mit konstanter Dornrotation, die Heizenergie auf den Kunststoffvorformling variiert und somit in Rotationsrichtung ein inhomogenes Temperaturprofil aufgebracht.

Fig. 13c zeigt eine weitere mögliche Ausführungsform eines Applikators bzw. Resonators. Es wäre durchaus auch denkbar und ggf. beispielsweise hinsichtlich des sog. Footprint oder der Anordnung sinnvoll die Erwärmungsvorrichtung wie in Fig. 13c gezeigt, als Rundläufer auszuführen. Hierbei müsste der Resonator in eine Kreisform gebogen sein und entweder der gesamte Resonator sich mit den Preforms drehen oder aber nur die Preforms sich durch den gebogenen Resonator bewegen. Auch könnte es sinnvoll sein die Preforms mit einem synchronen und/oder stationären Verstellmechanismus für die Temperaturprofilierung durch den Resonator rotieren zu lassen.

Die Vorteile könnten sein, dass evtl. Temperaturprofilierungseinrichtungen leichter integriert werden könnten oder eine Regelung der Preformtemperatur je Preform leichter funktionieren könnte.

Das Bezugszeichen 82 kennzeichnet einen Bereich, in dem die Kunststoffvorformlinge der Erwärmungsvorrichtung übergeben werden und das Bezugszeichen 40 kennzeichnet wiederum den Applikator, durch den die Kunststoffvorformlinge 10 transportiert werden. Das Bezugszeichen 84 kennzeichnet eine Baugruppe, die zur Temperaturprofilierung geeignet und bestimmt ist.

Fig. 13d zeigt eine weitere mögliche Vorgehensweise, um eine Temperaturprofilierung zu erreichen. Während der Heizphase oder nach der Heizphase oder während der Transferphase nach der Heizphase kann eine örtliche Abnahme der Temperatur durch beispielsweise einer Vortecdüse 86 und/oder eine Oberflächenkühlung und/oder durch Kontakt (Proshape) oder einer anderen Weise erfolgen. Auch kann es vorteilhaft sein, während der Heizphase gleichzeitig zu kühlen, um gewisse Bereiche vor dem Überhitzen zu hindern oder aber eine gewisse Temperaturprofilierung zu erzielen. Auch könnte es möglich sein, durch die Kühlung den Kunststoffvorformling auf eine gewisse festlegbare Temperatur zu kühlen und die Kühlung als Regelkreislauf aufzubauen. Die Stellgröße, mit dem der Lüfter o.ä. betrieben wird wäre dann die Regelgröße, mit der die Temperatur des Kunststoffvorformlings eingestellt wird.

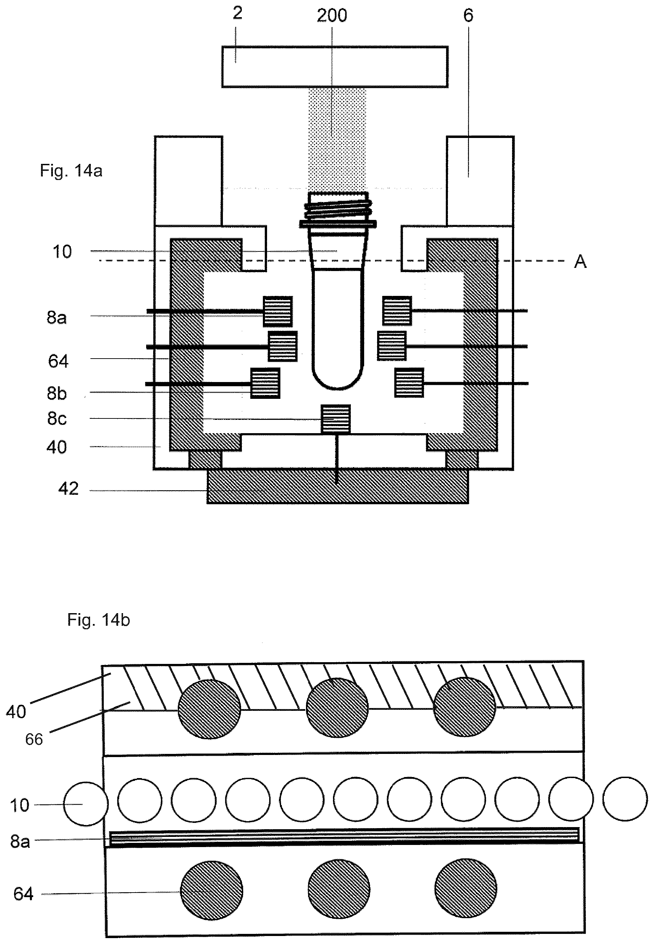

Fig. 14a zeigt eine weitere Ausführungsform der erfindungsgemäßen Vorrichtung. Bei dieser Ausführungsform ist innerhalb des Applikatoreinrichtung eine Vielzahl von Funktionselementen 8a - 8c angeordnet. Man erkennt, dass den mit den Bezugszeichen 8a - 8c gekennzeichneten Funktionselementen auch jeweils gegenüberliegende Funktionselemente zugeordnet sind.

Dabei sind die jeweils bezüglich des Kunststoffvorformlings 10 gegenüberliegenden Funktionselemente jeweils in der gleichen Stellung angeordnet, also insbesondere gegenüber dem Transportpfad der Kunststoffvorformlinge symmetrisch angeordnet.

Die einzelnen Funktionselemente 8a, 8b, 8c sind in einer Richtung, welche senkrecht zu dem Transportpfad der Kunststoffvorformlinge steht bewegbar. Dabei handelt es sich bei den Funktionselementen 8a und 8b jeweils um eine horizontale Richtung und bei dem Funktionselement 8c um eine vertikale Richtung.

Bevorzugt sind die einzelnen Funktionselemente 8a, 8b, 8c jedoch unabhängig voneinander bewegbar.

Das Bezugszeichen 64 kennzeichnet ein Abstimmelement, welches in Fig. 14a bezüglich einer vertikalen Drehachse, d.h. einer Drehachse, die parallel zu der Längsrichtung des Kunststoffvorformlings verläuft, drehbar ist.

Durch diese Drehung des Abstimmelements kann der (hier halbkreisförmige) Querschnitt des Abstimmelements näher an den Kunststoffvorformling bewegt werden. In Fig. 14a sind zwei derartige Abstimmelemente gezeigt, die sich bezüglich der Kunststoffvorformlinge bzw. bezüglich deren Transportpfad gegenüber liegen.

Fig. 14b zeigt eine Draufsicht auf die in Fig, 14a gezeigte Vorrichtung auf die Linie A aus Fig. 14a. Dabei sind hier insgesamt sechs Abstimmelemente 64 erkennbar, die auf den beiden Seiten des Transportpfads der Kunststoffvorformlinge 10 angeordnet sind. Genauer sind diese Abstimmelemente hier bevorzugt symmetrisch zu diesem Transportpfad angeordnet.

Wie oben erwähnt sind dabei bevorzugt diese Abstimmelemente 64 in den Maxima des elektrischen Felds angeordnet. Bevorzugt sind diese Abstimmelemente 64 jeweils in äquidistanten Positionen zueinander angeordnet.

Das Bezugszeichen 66 kennzeichnet eine Wandung, in welche die einzelnen Abstimmelemente 64 eingebaut sind. Eine entsprechende (nicht dargestellte) Wandung ist bevorzugt auch auf der gegenüberliegenden Seite des Transportpfads angeordnet.

Die einzelnen Abstimmelemente sind gegenüber diesen Wandungen drehbar. Da, wie oben erwähnt, die Abstimmelemente jeweils ein halbkreisförmiges Profil (in Fig. 14b ist nur der kreisförmige Endabschnitt erkennbar, vgl. Schnitt in Fig. 14a) aufweisen) kann durch die Drehstellung der Abstimmelemente festgelegt werden, welcher Anteil der Abstimmelemente aus den jeweiligen Wandungen 66 in Richtung des Transportpfads der Kunststoffvorformlinge 10 herausragt. Die Wandung kann aus dem gleichen Material bestehen, wie die Abstimmelement

So wäre es in einer Drehstellung der Abstimmelemente möglich, dass diese im Wesentlichen vollständig in die Wandung eingesenkt sind und in einer anderen Drehstellung (welche gegenüber der erstgenannten Drehstellung um 180° verdreht ist) maximal aus der Wandung 66 herausragen.

Das Bezugszeichen 8a zeigt wiederum ein Funktionselement, welches sich hier, wie in Fig. 14b gezeigt, entlang der gesamten Applikatoreinrichtung erstreckt. Das weitere in Fig. 14a gezeigte Funktionselement 8b ist in Fig. 14b nicht erkennbar, da es sich unterhalb des Funktionselements 8a befindet. Ein entsprechendes Funktionselement ist auch auf der gegenüberliegenden Seite des Transportpfads vorhanden, jedoch in Fig. 14b aus Gründen der Übersichtlichkeit nicht dargestellt.

### Bezugszeichenliste

- 1: Vorrichtung
- 2: Transporteinrichtung
- 6: erste Dämpfungseinrichtung
- 8: Funktionselement
- 8a,b,c: Funktionselemente
- 10: Kunststoffvorformling
- 10a: Mündung des Kunststoffvorformlings
- 12: Temperaturmesseinrichtung
- 14: Temperaturmesseinrichtung
- 16: weitere Dämpfungseinrichtungen
- 40: Applikatoreinrichtung
- 42: Zuführeinrichtung, Einkoppeleinrichtung
- 44: Ausführ- bzw. Auskoppeleinrichtung
- 45: Kanal
- 46: Spalt
- 48: Spalt
- 49: Spalt
- 52,54: Umlenkungsbereiche
- 60: Abstimmeinrichtung, Tuning-Einrichtung
- 61: Vorsprünge
- 62: Schutzfenster
- 63: Träger
- 64: Abstimmelement
- 66: Wand
- 68: dieelektrischer Block
- 70: dieelektrisches Material
- 72: Kurzschlusselement
- 73,74: Sensoreinrichtung
- 78: Hohlleiter
- 82: Bereich
- 86: Vortecdüse
- 92: Leistungsquelle
- 94: Mikrowellengenerator
- 95: Leistungssplitter
- 96: Mikrowellenquelle
- 98: Wasserlasten, Zirkulator
- 102: Mikrowellenquelle
- 104: Kopf
- 106: Wechselstromquelle
- 120: Steuerungseinrichtung
- 130: Gehäuse
- 132: erste Sensoreinrichtung
- 134: zweite Sensoreinrichtung
- 136: Sensoreinrichtung
- 138: Sensor- oder Messeinrichtung
- 140: Auswurfeinrichtung
- 142: weitere Inspektionseinrichtung
- 150: Blasformmaschine
- 152: Ventilblock
- 154: erstes Seitenteil
- 156: zweites Seitenteil
- 158: Bodenteil
- 162: Reckstange
- 200: Halteeinrichtung
- 202: Halteabschnitt
- 206: Spreizkörper
- 208: Grundkörper, Träger
- 210b: Innenwandung des Kunststoffvorformlings
- 224,226: Halteelemente
- 224a,226a: Endabschnitte der Halteelemente
- 225: Schlitze
- 232: Basiskörper
- 242: Nuten, Ausnehmungen
- 244: umlaufender Vorsprung
- 242a, 244a: Schrägflächen
- 250: Führungsvorrichtung
- 251, 252, 253: Führungseinrichtungen
- 255: Kugel
- 261: umlaufende Nut
- 262: Spreizelement
- 263: Aufnahmenut
- 268: Anschlag
- 272: kanalartige Öffnung
- 273, 274: Schienen
- 280: Befestigungsabschnitt
- 282: Öffnung
- 283: Ausnehmung
- 288: Anlagefläche
- L: Längsrichtung der Kunststoffvorformlinge

## Patentansprüche

1. Vorrichtung (1) zum Erwärmen von Kunststoffvorformlingen (10) mit einer Transporteinrichtung (2), welche die Kunststoffvorformlinge (10) entlang eines vorgegebenen Transportpfads transportiert, wobei die Transporteinrichtung Halteeinrichtungen (200) zum Halten der Kunststoffvorformlinge (10) aufweist und wobei dieser Transportpfad wenigstens einen Erwärmungsabschnitt (E) aufweist, innerhalb dessen die Kunststoffvorformlinge (10) erwärmt werden und mit einer Erwärmungseinrichtung, welche insbesondere stationär wenigstens abschnittsweise entlang des Transportpfads angeordnet ist und welche die von der Transporteinrichtung transportierten Kunststoffvorformlinge (10) während deren Transport durch den Erwärmungsabschnitt (E) erwärmt, wobei die Erwärmungseinrichtung wenigstens eine insbesondere stationäre Applikatoreinrichtung (40) aufweist, welche dazu geeignet und bestimmt ist, die Kunststoffvorformlinge (10) mit Mikrowellen zu deren Erwärmung zu beaufschlagen, wobei die Transporteinrichtung (2) zumindest in dem Erwärmungsabschnitt (E) derart gegenüber der Applikatoreinrichtung (40) angeordnet ist, dass zumindest ein Abschnitt der Halteeinrichtungen (200) außerhalb der Applikatoreinrichtung (40) angeordnet ist, wobei bevorzugt die Applikatoreinrichtung dazu eingerichtet ist, wenigstens zeitweise mehrere Kunststoffvorformlinge gleichzeitig aufzunehmen, **dadurch gekennzeichnet, dass**
die Applikatoreinrichtung (40) als Einheit aufgebaut ist, welche einen Spalt (46) aufweist, durch welchen hindurch die Kunststoffvorformlinge (10) transportiert werden und die Vorrichtung (1) eine Mikrowellenerzeugungseinrichtung aufweist, welche außerhalb der Applikatoreinrichtung (40) angeordnet ist und wobei
die Vorrichtung (1) eine Dreheinrichtung (50) aufweist, welche die Kunststoffvorformlinge (10) wenigstens teilweise während deren Erwärmung um deren Längsachse dreht, und
die Halteeinrichtungen (200) wenigstens teilweise aus einem Material hergestellt sind, welches nicht durch Mikrowellen erwärmbar ist.

2. Vorrichtung (1) nach Anspruch 1,
**dadurch gekennzeichnet, dass**
die Kunststoffvorformlinge während ihrer Erwärmung im Erwärmungsabschnitt (E) in einer Richtung senkrecht zu ihrer Längsachse (L) transportiert werden.

3. Vorrichtung (1) nach wenigstens einem der vorangegangenen Ansprüche,
**dadurch gekennzeichnet, dass**
die Halteeinrichtungen (200) als Innengreifeinrichtungen ausgestaltet sind, wenigstens abschnittsweise in Mündungen (10a) der Kunststoffvorformlinge (10) eingreifen, um diese zu halten.

4. Vorrichtung (1) nach wenigstens einem der vorangegangenen Ansprüche,
**dadurch gekennzeichnet, dass**
die Vorrichtung (1) wenigstens eine Abschirmeinrichtung (6) aufweist, welche ein Austreten von Mikrowellen aus der Applikatoreinrichtung (42) wenigstens teilweise verhindert.

5. Vorrichtung (1) nach dem vorangegangenen Anspruch,
**dadurch gekennzeichnet, dass**
die Abschirmeinrichtung (6) aus einem oder mehreren Elementen besteht.

6. Vorrichtung nach Anspruch 4 oder 5,
**dadurch gekennzeichnet, dass**
die Wirkungsweise wenigstens einer Abschirmeinrichtung (6) und/oder eines Elements der Abschirmeinrichtung auf destruktiver Interferenz basiert.

7. Vorrichtung (1) nach wenigstens einem der vorangegangenen Ansprüche,
**dadurch gekennzeichnet, dass**
die Vorrichtung (1) eine Abstimmeinrichtung (60) aufweist, welche zur Regulierung einer Erwärmungsleistung für die Kunststoffvorformlinge und/oder zur Anpassung der Applikatoreinrichtung geeignet und bestimmt ist.

8. Vorrichtung (1) nach dem vorangegangenen Anspruch,
**dadurch gekennzeichnet, dass**
die Abstimmeinrichtung (60) dazu geeignet und bestimmt ist, eine Resonanzfrequenz und eine Sendefrequenz aufeinander abzustimmen.

9. Vorrichtung (1) nach wenigstens einem der vorangegangenen Ansprüche 7 - 8,
**dadurch gekennzeichnet, dass**
die Abstimmeinrichtung (60) wenigstens ein drehbares und/oder verschiebbares Abstimmelement (64) aufweist.

10. Vorrichtung (1) nach wenigstens einem der vorangegangenen Ansprüche,
**dadurch gekennzeichnet, dass**
wenigstens ein Ende der Applikatoreinrichtung (40) in der Transportrichtung offen ist.

11. Vorrichtung (1) nach wenigstens einem der vorangegangenen Ansprüche,
**dadurch gekennzeichnet, dass**
die Applikatoreinrichtung dazu geeignet und bestimmt ist, auf die Kunststoffvorformlinge ein sich in deren Längsrichtung änderndes Temperaturprofil aufzubringen.

12. Vorrichtung (1) nach wenigstens einem der vorangegangenen Ansprüche,
**dadurch gekennzeichnet, dass**
die Applikatoreinrichtung metallische und/oder dielektrische Elemente aufweist, wobei bevorzugt diese metallischen und/oder dielektrischen Elemente austauschbar sind und/oder wenigstens eine Position dieser Elemente veränderbar ist.

13. Vorrichtung nach dem vorangegangenen Anspruch,
**dadurch gekennzeichnet, dass**
wenigstens eine Position dieser Elemente geregelt veränderbar ist.

14. Verfahren zum Erwärmen von Kunststoffvorformlingen (10), wobei die Kunststoffvorformlinge mit einer Transporteinrichtung (2) entlang eines vorgegebenen Transportpfads transportiert werden, wobei die Transporteinrichtung Halteeinrichtungen (200) zum Halten der Kunststoffvorformlinge (10) aufweist und wobei dieser Transportpfad wenigstens einen Erwärmungsabschnitt (E) aufweist, innerhalb dessen die Kunststoffvorformlinge (10) erwärmt werden und mit einer Erwärmungseinrichtung, welche stationär wenigstens abschnittsweise entlang des Transportpfads angeordnet ist und welche die von der Transporteinrichtung (2) transportierten Kunststoffvorformlinge (10) während deren Transport durch den Erwärmungsabschnitt (E) erwärmt, wobei die Erwärmungseinrichtung eine stationäre Applikatoreinrichtung (40) aufweist, welche die Kunststoffvorformlinge (10) mit Mikrowellen zu deren Erwärmung beaufschlagt, wobei die Transporteinrichtung (2) zumindest in dem Erwärmungsabschnitt (E) derart gegenüber der Applikatoreinrichtung (40) angeordnet ist, dass zumindest ein Abschnitt der Halteeinrichtungen (200) außerhalb der Applikatoreinrichtung (40) angeordnet ist, wobei bevorzugt die Applikatoreinrichtung wenigstens zeitweise mehrere Kunststoffvorformlinge gleichzeitig aufnimmt,
**dadurch gekennzeichnet, dass**
die Applikatoreinrichtung (40) als Einheit aufgebaut ist, welche einen Spalt (46) aufweist, durch welchen hindurch die Kunststoffvorformlinge (10) transportiert werden und eine Mikrowellenerzeugungseinrichtung vorgesehen ist, welche außerhalb der Applikatoreinrichtung (40) angeordnet ist und wobei
eine Dreheinrichtung (50) vorgesehen ist, welche die Kunststoffvorformlinge (10) wenigstens teilweise während deren Erwärmung um deren Längsachse dreht, und
die Halteeinrichtungen (200) wenigstens teilweise aus einem Material hergestellt sind, welches nicht durch Mikrowellen erwärmbar ist.

## Claims

1. Apparatus (1) for heating plastic preforms (10) with a transport device (2) which transports the plastic preforms (10) along a predefined transport path, wherein the transport device comprises holding devices (200) for holding the plastic preforms (10) and wherein said transport path has at least one heating portion (E) inside which the plastic preforms (10) are heated, and with a heating device which is arranged in particular stationarily at least in portions along the transport path and which heats the plastic preforms (10) transported by the transport device during their transport through the heating portion (E), wherein the heating device has at least one in particular stationary applicator device (40) which is suitable and intended for applying the plastic preforms (10) with microwaves in order to heat them, wherein at least in the heating portion (E), the transport device (2) is arranged relative to the applicator device (40) such that at least parts of the holding devices (200) are arranged outside the applicator device (40), wherein preferably the applicator device is configured to receive several plastic preforms simultaneously for at least some of the time,
**characterised in that**
the applicator device (40) is constructed as an unit having a slot (46) through which the plastic preforms (10) are transported and the apparatus (1) has a microwave generation device which is arranged outside the applicator device (40) and wherein
the apparatus (1) has a rotation device (50) which rotates the plastic preforms (10), at least partially, around their longitudinal axis during their heating, and
the holding devices (200) are at least made from a material which is not heated by the microwaves.

2. Apparatus (1) according to claim 1,
**characterised in that**
the plastic preforms are transported in a direction perpendicular to their longitudinal axis (L) during their heating in the heating portion (E).

3. Apparatus (1) according to at least one of the preceding claims,
**characterised in that**
the holding devices (200) are configured as internal gripper devices which are at least in portions engage in mouths (10a) of the plastic preforms (10) in order to hold these.

4. Apparatus (1) according to at least one of the preceding claims,
**characterised in that**
the apparatus (1) has at least one shielding device (6) which at least partially prevents the emergence of microwaves from the applicator device (42).

5. Apparatus (1) according to the preceding claim,
**characterised in that**
the shielding device (6) consists of one or more elements.

6. Apparatus according to claim 5 or 6,
**characterised in that**
the operation of at least one shielding device (6) and/or an element of the shielding device is based on destructive interference.

7. Apparatus (1) according to at least one of the preceding claims,
**characterised in that**
the apparatus (1) has a tuning device (60) which is suitable and intended for regulating a heating power for the plastic preforms and/or for adapting the applicator device.

8. Apparatus (1) according to the preceding claim,
**characterised in that**
the tuning device (60) is suitable and intended for matching a resonance frequency and an emission frequency to each other.

9. Apparatus (1) according to at least one of the preceding claims 7 - 8,
**characterised in that**
the tuning device (60) has at least one rotatable and/or displaceable tuning element (64).

10. Apparatus (1) according to at least one of the preceding claims,
**characterised in that**
at least one end of the applicator device (40) is open in the transport direction.

11. Apparatus (1) according to at least one of the preceding claims,
**characterised in that**
the applicator device is suitable and intended for applying to the plastic preforms a temperature profile which changes in their longitudinal direction.

12. Apparatus (1) according to at least one of the preceding claims,
**characterised in that**
the applicator device comprises metallic and/or dielectric elements, wherein preferably these metallic and/or dielectric elements can be exchanged and/or at least a position of these elements can be changed.

13. Apparatus according to the preceding claim,
**characterised in that**
at least a position of these elements can be changed in regulated fashion.

14. Method for heating plastic preforms (10), wherein the plastic preforms are transported along a predefined transport path by a transport device (2), wherein the transport device comprises holding devices (200) for holding the plastic preforms (10) and wherein this transport path has at least one heating portion (E) inside which the plastic preforms (10) are heated, and with a heating device which is arranged in particular stationarily at least in portions along the transport path and which heats the plastic preforms (10) transported by the transport device during their transport through the heating portion (E), wherein the heating device has a stationary applicator device (40) which applies the plastic preforms (10) with microwaves in order to heat them, wherein at least in the heating portion (E), the transport device (2) is arranged relative to the applicator device (40) such that at least parts of the holding devices (200) are arranged outside the applicator device (40), wherein preferably the applicator device is configured to receive several plastic preforms simultaneously for at least some of the time,
**characterised in that**
the applicator device (40) is constructed as an unit having a slot (46) through which the plastic preforms (10) are transported and the apparatus (1) has a microwave generation device which is arranged outside the applicator device (40) and wherein
the apparatus (1) has a rotation device (50) which rotates the plastic preforms (10), at least partially, around their longitudinal axis during their heating, and
the holding devices (200) are at least made from a material which is not heated by the microwaves.

## Revendications

1. Dispositif (1) de chauffage de préformes en matière plastique (10) avec un dispositif de transport (2) qui transporte les préformes en matière plastique (10) le long d'une voie de transport prédéfinie, dans lequel le dispositif de transport présente des dispositifs de retenue (200) pour la retenue des préformes en matière plastique (10) et dans lequel cette voie de transport présente au moins une section de chauffage (E), à l'intérieur de laquelle les préformes en matière plastique (10) sont chauffées et avec un dispositif de chauffage qui est agencé en particulier de manière fixe au moins par sections le long de la voie de transport et qui chauffe les préformes en matière plastique (10) transportées par le dispositif de transport pendant leur transport par la section de chauffage (E), dans lequel le dispositif de chauffage présente au moins un dispositif applicateur (40) en particulier fixe qui est approprié et destiné à alimenter les préformes en matière plastique (10) en micro-ondes pour leur chauffage, dans lequel le dispositif de transport (2) est agencé au moins dans la section de chauffage (E) par rapport au dispositif applicateur (40) de telle manière qu'au moins une section des dispositifs de retenue (200) soit agencée en dehors du dispositif applicateur (40), dans lequel le dispositif applicateur est de préférence conçu afin de recevoir simultanément au moins temporairement plusieurs préformes en matière plastique, **caractérisé en ce que**
le dispositif applicateur (40) est constitué comme une unité qui présente une fente (46), à travers laquelle les préformes en matière plastique (10) sont transportées et le dispositif (1) présente un dispositif de génération de micro-ondes qui est agencé en dehors du dispositif applicateur (40) et dans lequel
le dispositif (1) présente un dispositif de rotation (50) qui fait tourner les préformes en matière plastique (10) au moins partiellement pendant leur chauffage autour de leur axe longitudinal, et
les dispositifs de retenue (200) sont fabriqués au moins partiellement en un matériau qui ne peut pas être chauffé par des micro-ondes.

2. Dispositif (1) selon la revendication 1,
**caractérisé en ce que**
les préformes en matière plastique sont transportées pendant leur chauffage dans la section de chauffage (E) dans un sens perpendiculaire à leur axe longitudinal (L).

3. Dispositif (1) selon au moins l'une quelconque des revendications précédentes,
**caractérisé en ce que**
les dispositifs de retenue (200) sont configurés comme dispositifs de prise intérieure, s'engagent au moins par sections dans des embouchures (10a) des préformes en matière plastique (10) afin de retenir celles-ci.

4. Dispositif (1) selon au moins l'une quelconque des revendications précédentes,
**caractérisé en ce que**
le dispositif (1) présente au moins un dispositif de blindage (6) qui empêche au moins partiellement une sortie de micro-ondes du dispositif applicateur (42).

5. Dispositif (1) selon la revendication précédente,
**caractérisé en ce que**
le dispositif de blindage (6) se compose d'un ou de plusieurs éléments.

6. Dispositif (1) selon la revendication 4 ou 5,
**caractérisé en ce que**
le fonctionnement au moins d'un dispositif de blindage (6) et/ou d'un élément du dispositif de blindage se base sur l'interférence destructive.

7. Dispositif (1) selon au moins l'une quelconque des revendications précédentes,
**caractérisé en ce que**
le dispositif (1) présente un dispositif d'ajustement (60) qui est approprié et destiné à la régulation d'une puissance de chauffage pour les préformes en matière plastique et/ou à l'adaptation du dispositif applicateur.

8. Dispositif (1) selon la revendication précédente,
**caractérisé en ce que**
le dispositif d'ajustement (60) est approprié et destiné à ajuster une fréquence de résonance et une fréquence d'émission l'une sur l'autre.

9. Dispositif (1) selon au moins l'une quelconque des revendications précédentes 7 à 8,
**caractérisé en ce que**
le dispositif d'ajustement (60) présente au moins un élément d'ajustement (64) rotatif et/ou mobile.

10. Dispositif (1) selon au moins l'une quelconque des revendications précédentes,
**caractérisé en ce que**
au moins une extrémité du dispositif applicateur (40) est ouverte dans le sens de transport.

11. Dispositif (1) selon au moins l'une quelconque des revendications précédentes,
**caractérisé en ce que**
le dispositif applicateur est approprié et destiné à appliquer sur les préformes en matière plastique un profil de température se modifiant dans leur sens longitudinal.

12. Dispositif (1) selon au moins l'une quelconque des revendications précédentes,
**caractérisé en ce que**
le dispositif applicateur présente des éléments métalliques et/ou diélectriques, dans lequel de préférence, ces éléments métalliques et/ou diélectriques sont interchangeables et/ou au moins une position de ces éléments est modifiable.

13. Dispositif selon la revendication précédente,
**caractérisé en ce que**
au moins une position de ces éléments est modifiable de manière régulée.

14. Procédé de chauffage de préformes en matière plastique (10), dans lequel les préformes en matière plastique sont transportées avec un dispositif de transport (2) le long d'une voie de transport prédéfinie, dans lequel le dispositif de transport présente des dispositifs de retenue (200) pour la retenue des préformes en matière plastique (10) et dans lequel cette voie de transport présente au moins une section de chauffage (E), à l'intérieur de laquelle les préformes en matière plastique (10) sont chauffées et avec un dispositif de chauffage qui est agencé de manière fixe au moins par sections le long de la voie de transport et qui chauffe les préformes en matière plastique (10) transportées par le dispositif de transport (2) pendant leur transport par la section de chauffage (E), dans lequel le dispositif de chauffage présente un dispositif applicateur (40) fixe qui alimente les préformes en matière plastique (10) en micro-ondes pour leur chauffage, dans lequel le dispositif de transport (2) est agencé au moins dans la section de chauffage (E) par rapport au dispositif applicateur (40) de telle manière qu'au moins une section des dispositifs de retenue (200) soit agencée en dehors du dispositif applicateur (40), dans lequel le dispositif applicateur reçoit de préférence simultanément au moins temporairement plusieurs préformes en matière plastique,
**caractérisé en ce que**
le dispositif applicateur (40) est constitué comme une unité qui présente une fente (46), à travers laquelle les préformes en matière plastique (10) sont transportées et un dispositif de génération de micro-ondes est prévu, lequel est agencé en dehors du dispositif applicateur (40) et dans lequel
un dispositif de rotation (50) est prévu, lequel fait tourner les préformes en matière plastique (10) au moins partiellement pendant leur chauffage autour de leur axe longitudinal, et
les dispositifs de retenue (200) sont fabriquées au moins partiellement en un matériau qui ne peut pas être chauffé par des micro-ondes.
